(19) Europäisches Patentamt
European Patent Office
Office européen des brevets

(11) **EP 4 654 036 A1**

(12) **EUROPEAN PATENT APPLICATION**
published in accordance with Art. 153(4) EPC

(43) Date of publication:
**26.11.2025 Bulletin 2025/48**

(21) Application number: **24857955.9**

(22) Date of filing: **17.06.2024**

(51) International Patent Classification (IPC):
***G06F 16/22*** *(2019.01)*

(52) Cooperative Patent Classification (CPC):
Y02D 10/00

(86) International application number:
**PCT/CN2024/099630**

(87) International publication number:
**WO 2025/044410 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311111908**

(71) Applicant: **Tencent Technology (Shenzhen)
Company Limited
Shenzhen, Guangdong 518057 (CN)**

(72) Inventors:
• **WU, Xin**
**Shenzhen, Guangdong 518057 (CN)**

• **LI, Shuo**
**Shenzhen, Guangdong 518057 (CN)**
• **ZHENG, Lixiong**
**Shenzhen, Guangdong 518057 (CN)**
• **PAN, Anqun**
**Shenzhen, Guangdong 518057 (CN)**
• **LEI, Hailin**
**Shenzhen, Guangdong 518057 (CN)**
• **LU, Fuyang**
**Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **DATA STORAGE METHOD AND APPARATUS, ELECTRONIC DEVICE, COMPUTER-READABLE STORAGE MEDIUM, AND COMPUTER PROGRAM PRODUCT**

(57) The present application provides a data storage method and apparatus, a device, a computer-readable storage medium, and a computer program product. The method comprises: obtaining a plurality of query requests for an application, and parsing each query request to obtain at least one piece of column information included in each query request; on the basis of the at least one piece of column information included in each query request, determining a candidate column combination of tables associated with each query request, such that when table data of the tables associated with the query request is stored according to the candidate column combination, the query overhead for executing the query request is minimized; on the basis of a plurality of candidate column combinations pertaining to a same table, determining a target column combination corresponding to the table, such that when table data of each table is stored according to the respective target column combination, the total query overhead for executing the plurality of query requests is minimized; and storing the table data of each table according to the target column combination.

Acquire a plurality of query requests for an application, and parse the query requests to obtain at least one piece of column information included in each query request or in the query requests — 101

Determine, based on at least one piece of column information included in each query request or in the query requests, candidate column combinations of one or more tables related to each of the query requests — 102

Determine, based on a plurality of candidate column combinations belonging to one of tables related to the plurality of query requests, respective target column combinations of the tables — 103

Store table data of the tables according to the respective target column combinations — 104

FIG. 4

**Description**

RELATED APPLICATION

This application is based upon and claims priority to Chinese Patent Application No. 202311111908.5, filed on August 31, 2023, which is incorporated herein by reference in its entirety.

FIELD OF THE TECHNOLOGY

This application relates to storage technologies, and in particular, to a data storage method and apparatus, an electronic device, a computer-readable storage medium, and a computer program product.

BACKGROUND OF THE DISCLOSURE

Database storage includes a row storage manner and a column storage manner. The row storage manner is a manner in which row data is used as a basic logical storage unit for storage. This manner is suitable for a random read operation and is not suitable for big data. With the wide application of big data, columnar storage has emerged. The columnar storage refers to that all data of a column is stored together, and different columns may be separately stored. The columnar storage is widely used in on-line analytical processing (OLAP) of a database to improve the processing efficiency of an analytical query statement.

Currently, columnar storage refers to storing a column of data in a file. When a query request is executed, a plurality of columns usually need to be accessed. Consequently, a plurality of files need to be simultaneously opened for filtering access, resulting in low query efficiency.

SUMMARY

Embodiments of this application provide a data storage method and apparatus, an electronic device, a computer-readable storage medium, and a computer program product, which can optimize the storage of table data according to query requests of an application, thereby improving the query efficiency.

Technical solutions of the embodiments of this application are implemented as follows.

The embodiments of this application provide a data storage method, which is applied to an electronic device and includes the following operations:

acquiring a plurality of query requests for an application, and parsing the query requests to obtain at least one piece of column information included in each query request or in the query requests;

determining, based on the at least one piece of column information included in each query request or in the query requests, candidate column combinations of one or more tables related to each of the query requests, where a query overhead for executing the query request is minimum if table data of the one or more tables related to the query request is stored according to the candidate column combinations corresponding to the query request;

determining, based on a plurality of candidate column combinations belonging to one of tables related to the plurality of query requests, respective target column combinations of the tables; and

storing the table data of the tables according to the respective target column combinations such that a total query overhead for executing the plurality of query requests is minimum.

The embodiments of this application provide a data storage apparatus, including: a first acquisition module configured to acquire a plurality of query requests for an application, and parse the query requests to obtain at least one piece of column information included in each query request or in the query requests; a first determining module configured to determine, based on the at least one piece of column information included in each query request or in the query requests, candidate column combinations of one or more tables related to each of the query requests, where a query overhead for executing the query request is minimum if table data of the one or more tables related to the query request is stored according to the candidate column combinations corresponding to the query request; a second determining module configured to determine, based on a plurality of candidate column combinations belonging to one of tables related to the plurality of query requests, respective target column combinations of the tables; and a data storage module configured to store the table data of the tables according to the respective target column combinations such that a total query overhead for executing the plurality of query requests is minimum.

The embodiments of this application provide an electronic device, including:

a memory configured to store a computer-executable instruction; and
a processor configured to implement the data storage method provided in the embodiments of this application when executing the computer-executable instruction stored in the memory.

The embodiments of this application provide a computer-readable storage medium, having a computer program or a computer-executable instruction stored therein, and the computer program or the computer-executable instruction being configured to implement, when executed by a processor, the data storage method provided in the embodiments of this application.

The embodiments of this application provide a computer program product, including a computer program or a computer-executable instruction, and the computer program or the computer-executable instruction, when executed by a processor, implementing the data storage method provided in the embodiments of this application.

The embodiments of this application have the following beneficial effects.

After the plurality of query requests for the application are acquired, the query requests are parsed to obtain the at least one piece of column information included in each query request or in the query requests. Then, the candidate column combinations of the tables that can reach the minimum query overhead when the query requests are executed on a single query request dimension are determined first, and then the target column combinations of the tables that can reach the minimum total query overhead when the plurality of query requests are executed on an application dimension are determined based on the candidate column combinations. The target column combination is a column combination that is frequently accessed simultaneously during the execution of the query request. For different applications, different target column combinations may be accessed simultaneously during the execution of the query requests. In the embodiments of this application, a target column combination that can achieve optimal storage in the application dimension and conforms to the application data access characteristic is determined according to a plurality of query requests for each application and the table data related to the query requests, thereby achieving self-adaptability between the target column combination and the application data access characteristic and improving the robustness of the data storage method provided in the embodiments of this application. Finally, the table data of the tables is merged and stored according to the corresponding target column combinations. Thus, in this application, when the query requests are executed, column data that is frequently accessed simultaneously can be merged and stored in one file, thereby reducing the number of opening times of the file, reducing the query time, and improving the data query efficiency.

BRIEF DESCRIPTION OF THE DRAWINGS

FIG. 1A is a schematic diagram of storing a column of data in a storage unit.

FIG. 1B is a schematic diagram of a file in which column data of columns in a table is stored.

FIG. 2 is a schematic diagram of a network architecture of a data query system 100 according to an embodiment of this application.

FIG. 3 is a schematic structural diagram of a server 400 according to an embodiment of this application.

FIG. 4 is a schematic flowchart of an implementation of a data storage method according to an embodiment of this application.

FIG. 5 is a schematic flowchart of an implementation of determining candidate column combinations of tables related to query requests according to an embodiment of this application.

FIG. 6 is a schematic flowchart of an implementation of determining basic column combination sets of tables related to an $i^{th}$ query request according to an embodiment of this application.

FIG. 7 is a schematic flowchart of an implementation of determining target column combinations of tables according to an embodiment of this application.

FIG. 8 is a schematic flowchart of an implementation of determining, in a case that table data of tables is stored according to corresponding merged candidate column combinations, total query overheads for executing a plurality of query requests according to an embodiment of this application.

FIG. 9 is a schematic flowchart of an implementation of data storage using target column combinations of tables according to an embodiment of this application.

FIG. 10 is a schematic flowchart of another implementation of a data storage method according to an embodiment of this application.

FIG. 11A is a schematic flowchart of an implementation of a database query through a query statement according to an embodiment of this application.

FIG. 11B is a schematic diagram of parsing a query statement to obtain a parse tree according to an embodiment of this application.

FIG. 11C is a schematic diagram of a storage format of a query record.

FIG. 12 is a schematic diagram of determining a basic column combination of T1.

FIG. 13 is a schematic diagram of determining a column reading overhead.

FIG. 14 is a schematic diagram of determining a column reading overhead during separate storage and merged storage of three columns.

FIG. 15 is a schematic diagram of merging three candidate column combinations of T1.

FIG. 16A is a schematic diagram of determining a total query overhead for storing table data according to a merged candidate column combination and executing a plurality of query statements according to an embodiment of this application.

FIG. 16B is a schematic diagram of determining a column combination with a minimum total overhead according to an embodiment of this application.

FIG. 17 is a schematic diagram of determining a sparse column according to an embodiment of this application.

FIG. 18 is a schematic diagram of block storage of sparse optimal column combinations according to an embodiment of this application.

FIG. 19 is a schematic diagram of a system table according to an embodiment of this application.

## DESCRIPTION OF EMBODIMENTS

To make the objectives, technical solutions, and advantages of this application clearer, this application will be described in further detail below with reference to the accompanying drawings. The described embodiments are not to be considered as a limitation to this application. All other embodiments obtained by a person skilled in the art without creative efforts shall fall within the protection scope of this application.

The term, involved in the following description, "some embodiments" describes subsets of all possible embodiments, but "some embodiments" may be the same subset or different subsets of all the possible embodiments and may be combined with each other without conflict.

The term, involved in the following description, "first/second" is merely intended to distinguish similar objects rather than describing specific orders. The "first/-second" is interchangeable in proper circumstances to enable the embodiments of this application to be implemented in other orders than those illustrated or described herein.

In the embodiments of this application, the term "module" or "unit" refers to a computer program having a predetermined function or a part of a computer program, works together with other relevant parts to achieve a predetermined objective, and may be all or partially implemented through software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

Unless otherwise defined, meanings of all technical and scientific terms used in the embodiments of this application are the same as those usually understood by a person skilled in the technical field. Terms used in the embodiments of this application are merely intended to describe objectives of the embodiments of this application, but are not intended to limit this application.

Before the embodiments of this application are further described in detail, nouns and terms involved in the embodiments of this application are described. The nouns and terms involved in the embodiments of this application are applicable to the following explanations.

(1) OLAP is a software technology, which enables an analyst to quickly, consistently, and interactively observe information from various aspects to achieve a deep understanding of data.

2) Predicate: in an environment of a computer language, a predicate refers to a conditional expression that returns true or false.

3) A local predicate is a predicate configured only for accessing a table.

4) A join predicate is a predicate that defines a join relationship between tables.

5) Materialization refers to converting data into a row format to make a column format of columnar storage correspond to a query habit and expressed meaning of a user.

6) Late materialization refers to delaying the time of materialization to the late stage of an entire query life cycle as much as possible. Late materialization refers to that in a period of time before query execution, a query execution model is not relational algebra, but is column-based.

7) A path overhead refers to a consumed duration when a query request is executed according to an access path, and includes overhead for reading, according to the access path, column data of tables related to the query request. The overhead for reading column data includes an input/output (I/O) overhead and a central processing unit (CPU) overhead, where the I/O overhead further includes a file opening overhead, a random reading overhead, and a sequential reading overhead. The CPU overhead further includes a basic overhead, a page reading overhead, a page scanning overhead, and a scanning recording overhead.

8) A query overhead refers to a minimum path overhead when a query request is executed according to different access paths.

9) A reference overhead refers to query overhead for executing the query request when table data of a table related to the query request is stored according to a basic column combination. The table related to the query request is a table that appears in a query statement corresponding to the query request. The basic column combination is a column combination obtained after columns included in the table related to the query request are merged according to a preset merging condition. Storing the table data of the table related to the query request according to a basic column combination refers to storing column data corresponding to column identifiers included in the basic column combination into the same file.

10) A column combination refers to a combination formed by at least one data column in a data table. For example, a data table T1 includes four data columns, i.e., C1, C2, C3, and C4, then {C1, C2} is a column combination, and {C1, C2, C4} is also a column combination.

11) A sparse column refers to a column with a ratio of the number of pieces of null data to the number of pieces of total data in the column data is greater than a sparsity threshold.

To better understand the data storage method provided in the embodiments of this application, the column storage manner in the related art and disadvantages thereof are first described.

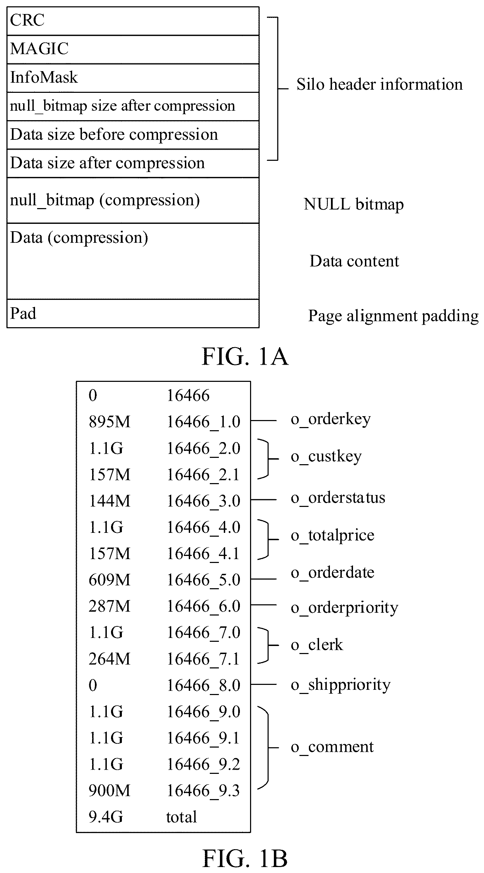

A current column storage manner refers to storing a column of data in a table into a file (or a storage unit). FIG. 1A is a schematic diagram of storing a column of data in a storage unit. As shown in FIG. 1A, in the related art, a column of data is stored in an independent storage unit Silo, where Silo is a compact arrangement of columnar distribution of data blocks. As shown in FIG. 1A, Silo header information, null map, data content, and padding for page alignment are stored in one Silo.

FIG. 1B is a schematic diagram of a file in which column data of columns in a table is stored. In FIG. 1B, "16466" in a first row is a table identifier. In a second row to a sixteenth row, a first column is a file size, and a second column is a file identifier. 16466_1.0 indicates that the file stores column data of a first column in the table 16466, and a column name of the first column is "o_orderkey". Each file may store 1.1 G of data at most, and when a size of the space occupied by column data of a column exceeds 1.1 G, the column data is split and stored into two or more files. For example, column data of the second column is stored in two files: 16466_2.0 and 16466_2.1. Data included in each file, as shown in FIG. 1A, includes Silo header information, null map, data content, and padding for page alignment.

Since some columns are often accessed simultaneously during queries, a plurality of files need to be opened simultaneously for filtering access, resulting in low query efficiency. In addition, sparse data may be caused in a scene similar to a label description. For example, when an article is described, labels of different types of articles may be greatly different. Consequently, a data column is very sparse, very little data is accessed for each file, and waste is caused. In addition, a data storage manner cannot be adaptive according to characteristics of application data.

Based on this, the embodiments of this application provide a data storage method and apparatus, an electronic device, a computer-readable storage medium, and a computer program product, which can realize storage optimization of column storage and improve the query efficiency. The following describes exemplary application of the electronic device provided in the embodiments of this application. The electronic device provided in the embodiments of this application may be implemented as various types of user terminals such as a notebook computer, a tablet computer, a desktop computer, a set-top box, a mobile device (for example, a mobile phone, a portable music player, a personal digital assistant, a dedicated message device, and a portable game device), a smartphone, a smart speaker, a smart watch, a smart TV, and an in-vehicle terminal, and may further be implemented as a server. Exemplary application in which the device is implemented as a server will be described below.

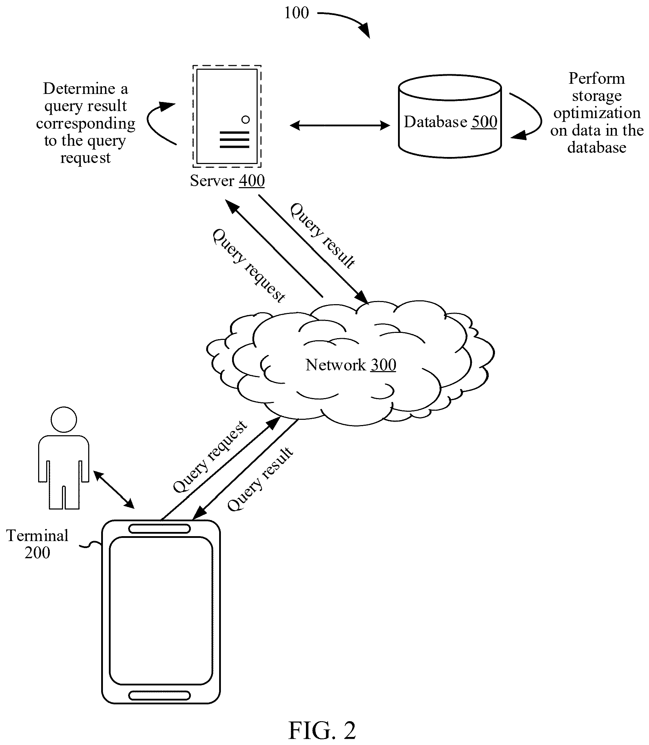

FIG. 2 is a schematic diagram of a network architecture of a data query system 100 according to an embodiment of this application. As shown in FIG. 2, the network architecture includes a terminal 200, a network 300, a server 400, and a database 500. The terminal 200 is connected to the server 400 through the network 300. The network 300 may be a wide area network, a local area network, or a combination thereof.

The terminal 200 transmits a query request to the server 400. The query request carries a query statement. After receiving the query request transmitted by the terminal 200, the server 400 parses the query request to acquire the query statement, determines a query result corresponding to the query request from the database 500 based on the query statement, and returns the query result to the terminal 200.

Data in the database 500 is optimized and stored using the data storage method provided in the embodiments of this application. When performing storage optimization on the data in the database 500, the server 400 first acquires a plurality of query requests for an application that are received within a preset historical duration. The application may be a shopping application, a video application, a music application, or the like. The server 400 parses the query requests to obtain at least one piece of column information included in each query request or in the query requests, and then determines, based on the at least one piece of column information included in each query request or in the query requests, candidate column combinations of one or more tables related to each of the query requests. A query overhead for executing the query request is minimum if table data of the one or more tables related to the query request is stored according to the candidate column combinations corresponding to the query request. To ensure that under various query conditions, a total overhead for performing the query is minimum, respective target column combinations of the tables are determined based on a plurality of candidate column combinations belonging to one of tables related to the plurality of query requests. When the table data of the tables is stored according to the respective target column combinations, a total query overhead for executing the plurality of query requests is minimum. In this case, the table data of the tables is stored according to the target column combinations. When the table data of the tables is stored according to the target column combinations, a total overhead for executing the plurality of query requests is minimum, that is, data storage of the database reaches optimal storage. In this case, when the server receives a query request again, and data access and data query are performed based on the current table data after optimized storage, a data access time can be reduced, thereby improving the query efficiency.

In some embodiments, the server 400 may be an independent physical server, may be a server cluster including a plurality of physical servers or a distributed system, or may be a cloud server that may provide basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform. The terminal 200 may be a smartphone, a tablet computer, a notebook computer, a desktop computer, a smart speaker, a smart watch, an in-vehicle terminal, or the like. This is not limited thereto. The terminal and the server may be connected directly or indirectly in a wired or wireless communication manner. This is not limited in the embodiments of this application.

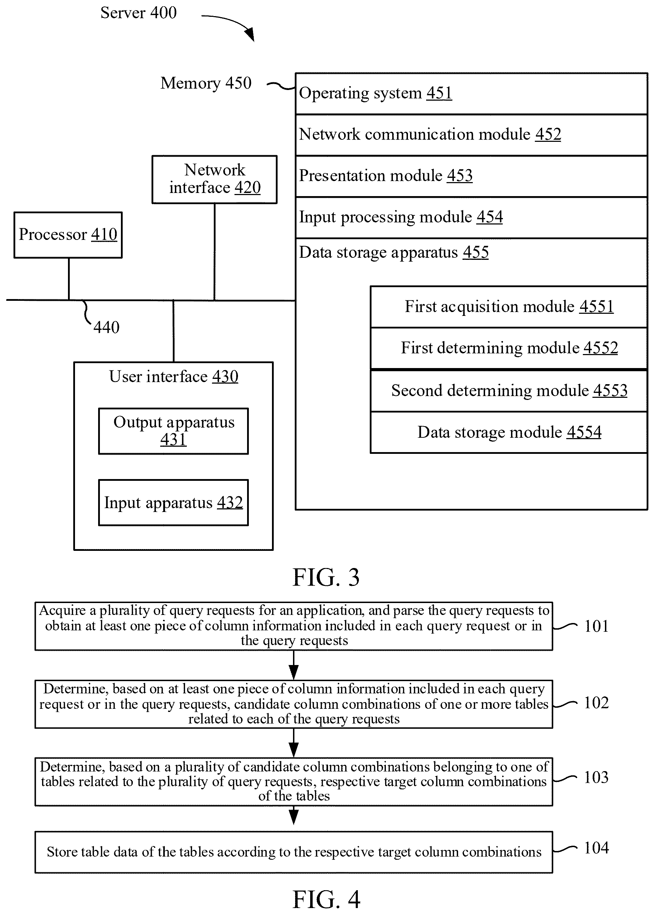

FIG. 3 is a schematic structural diagram of a server 400 according to an embodiment of this application. The server 400 shown in FIG. 3 includes: at least one processor 410, a memory 450, at least one network interface 420, and a user interface 430. Assemblies in the server 400 are coupled together through a bus system 440. The bus system 440 is configured to implement connection and communication between the assemblies. In addition to a data bus, the bus system 440 further includes a power bus, a control bus, and a state signal bus. However, for the sake of clarity, all types of buses in FIG. 3 are marked as the bus system 440.

The processor 410 may be an integrated circuit chip with a signal processing capability, such as a general-purpose processor, a digital signal processor (DSP), or another programmable logic device, discrete gate, transistor logic device, or discrete hardware component. The general-purpose processor may be a microprocessor, any conventional processor, or the like.

The user interface 430 includes one or more output apparatuses 431 that can present medium content, including one or more speakers and/or one or more visual display screens. The user interface 430 further includes one or more input apparatuses 432, including user interface components that facilitate user input, such as a keyboard, a mouse, a microphone, a touchscreen, a camera, and other input buttons and controls.

The memory 450 may be removable, irremovable, or a combination thereof. Exemplary hardware devices include a solid-state memory, a hard disk drive, a compact disc (CD) drive, and the like. The memory 450 in some embodiments includes one or more storage devices that are physically located away from the processor 410.

The memory 450 includes a volatile memory or a non-volatile memory, or may include both the volatile memory and the non-volatile memory. The non-volatile memory may be a read only memory (ROM), and the volatile memory may be a random access memory (RAM). The memory 450 described in this embodiment of this application is intended to include any suitable type of memory.

In some embodiments, the memory 450 can store data to support various operations. Examples of the data include a program, a module, and a data structure, or their subsets or supersets, which are exemplified below.

An operating system 451 includes system programs configured to process various basic system services and perform hardware-related tasks, for example, a frame layer, a core library layer, and a driver layer, which are configured to implement various basic businesses and process hardware-based tasks.

A network communication module 452 is configured to reach other electronic devices via one or more (wired or wireless) network interfaces 420. Illustratively, the network interface 420 includes: Bluetooth, wireless fidelity (WiFi), a universal serial bus (USB), and the like.

A presentation module 453 is configured to present information through one or more output apparatuses 431 (for example, a display screen or a speaker) associated with the user interface 430 (for example, a user interface configured to operate a peripheral device and display content and information).

An input processing module 454 is configured to detect one or more user enters or interactions from one of one or more input apparatuses 432 and translate the detected inputs or interactions.

In some embodiments, the apparatus provided in the embodiments of this application may be implemented in a software manner. FIG. 3 shows a data storage apparatus 455 stored in the memory 450. The data storage apparatus 455 may be software in the form of a program, a plug-in, and the like, and includes the following software modules: a first acquisition module 4551, a first determining module 4552, a second determining module 4553, and a data storage module 4554.

These modules are logical modules, and therefore may be randomly combined or further split according to the implemented functions. The functions of the modules will be explained below.

In other embodiments, the apparatus provided in the embodiments of this application may be implemented in a hardware manner. As an example, the apparatus provided in the embodiments of this application may be a processor in the form of a hardware decoding processor and programmed to perform the data storage method provided in the embodiments of this application. For example, the processor in the form of the hardware decoding processor may adopt one or more application specific integrated circuits (ASIC), a DSP, a programmable logic device (PLD), a complex programmable logic device (CPLD), a field-programmable gate array (FPGA), or other electronic elements.

The data storage method provided in the embodiments of this application is described in combination with the exemplary application and implementations of the server provided in the embodiments of this application.

The following describes the data storage method provided in the embodiments of this application. As mentioned above, an electronic device that implements the data storage method provided in the embodiments of this application may be a terminal, a server, or a combination of thereof. Therefore, an execution body of the operations is not repeatedly described below.

FIG. 4 is a schematic flowchart of an implementation of a data storage method according to an embodiment of this application. A description is provided in combination with the operations shown in FIG. 4. An execution body of the operations in FIG. 4 is a server.

Operation 101: Acquire a plurality of query requests for an application, and parse the query requests to obtain at least one piece of column information included in each query request or in the query requests.

In some embodiments, the server acquires the plurality of query requests for the application that are received within a preset historical duration. Illustratively, a plurality of query requests for the application that are received within 10 days may be acquired. After the plurality of query requests are acquired, the query requests are parsed to obtain at least one query statement, at least one column identifier corresponding to the query statements is determined, and column attribute information corresponding to column identifiers is determined. The column attribute information includes one of a local predicate column attribute, a join predicate column attribute, and a target selection column attribute. The column identifier and the column attribute information form column information.

In some embodiments, all query requests include at least one query statement. That is, at least one query request includes one query statement, or the plurality of query requests each include at least one query statement. Alternatively, all query requests each include at least one query statement.

Illustratively, the query statement obtained by parsing the query request may be as follows:

SELECT T1.C3, T2.C2

FROM T1, T2

WHERE T1.C1=1
AND T1.C2 = T2.C2.

After the query statement is obtained, a local predicate, a join predicate, and a target selection statement in the query statement are first determined. The local predicate is a predicate only configured for accessing one table. In the foregoing query statement, the local predicate is T1.C1 = 1, and the join predicate is a predicate that defines a join relationship between tables. In the foregoing query statement, the join predicate is T1.C2 = T2.C2, and the target selection statement is SELECT T1.C3, T2.C2. Then, column attribute information of a column identifier included in the local predicate is determined as the local predicate column attribute, column attribute information of a column identifier included in the join predicate is determined as the join predicate column attribute, and column attribute information of a column identifier included in the target selection statement is determined as the target selection column attribute.

When the column attribute information is determined, the column attribute information of the column identifier in the local predicate is first determined, then the column attribute information of the column identifier in the join predicate is determined, and finally, the column attribute information of the column identifier in the target selection statement is determined. When one column identifier appears in both the local predicate and the join predicate, the column attribute information of the column identifier is the local predicate column attribute.

The foregoing query statement is used as an example for description. The local predicate is T1.C1 = 1, and T1.C1 is the local predicate column attribute. The join predicate is T1.C2 = T2.C2, and column attribute information of T1.C2 and T2.C2 are both join predicate column attributes. The target selection statement is SELECT T1.C3, T2.C2, and the column identifiers included in the target selection statement are T1.C3 and T2.C2. Since the column attribute of T2.C2 has been determined as the join predicate column attribute, only the column attribute information of T1.C3 is the target selection column attribute. For example, T1 represents a table 1, C3 represents a third column, T1.C3 represents the third column in the table 1, and similarly, T2.C2 represents a second column in a table 2.

In operation 101, the plurality of query requests acquired in the preset duration is parsed to determine the at least one piece of column information included in each query request or in the query requests. In this way, a comprehensive and accurate data basis can be provided for subsequently determining a candidate column combination of each table when a minimum query overhead in a dimension of a single query request is achieved, and determining a target column combination of each table when a minimum total query overhead in an application dimension is achieved.

Operation 102: Determine, based on the at least one piece of column information included in each query request or in the query requests, candidate column combinations of one or more tables related to each of the query requests.

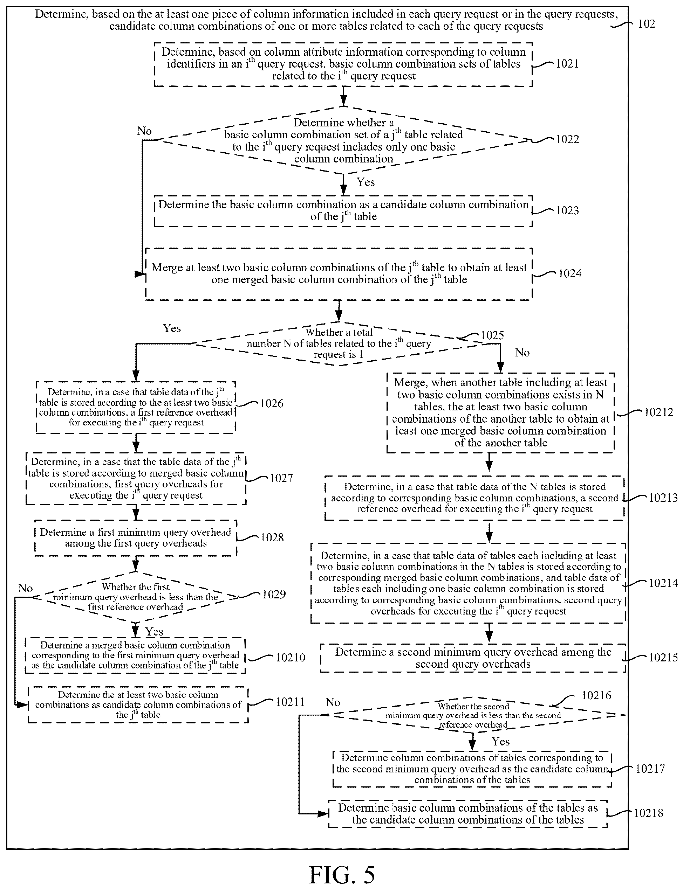

A query overhead for executing the query request is minimum if table data of the one or more tables related to the query request is stored according to the candidate column combinations corresponding to the query request. In some embodiments, referring to FIG. 5, operation 102 may be implemented through the following operation 1021 to operation 10218, which are specifically described below.

Operation 1021: Determine, based on column attribute information corresponding to column identifiers in an $i^{th}$ query request, basic column combination sets of tables related to the $i^{th}$ query request.

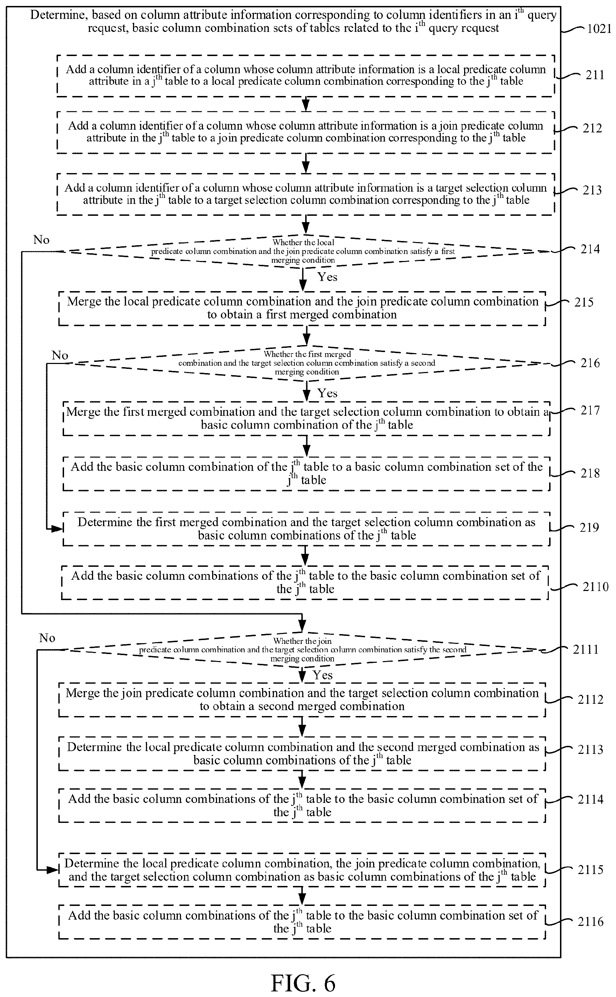

The basic column combination set includes at least one basic column combination, i = 1, ..., M, and M is a total number of query requests. In some embodiments, referring to FIG. 6, operation 1021 may be implemented through the following operation 211 to operation 2116, which are specifically described below.

Operation 211: Add a column identifier of a column whose column attribute information is the local predicate column attribute in the $j^{th}$ table to a local predicate column combination corresponding to the $j^{th}$ table.

j = 1, ..., N, and N is a total number of tables related to the $i^{th}$ query request. The table related to the $i^{th}$ query request is a table that appears in a query statement corresponding to the $i^{th}$ query request. The query statement is parsed to determine the number of the tables that appear in the query statement, to obtain the total number of tables related to the $i^{th}$ query request. Since column data with the same column attribute is generally accessed simultaneously, in this embodiment of this application, column identifiers of columns whose column attribute information in the tables are local predicate columns are adopted to construct local predicate column combinations corresponding to the tables.

Illustratively, tables related to the $i^{th}$ query request are T1 and T2. Column identifiers of columns whose column attribute information is the local predicate column attribute in T1 are T1.C1 and T1.C4, a column identifier of a column whose column attribute information is the join predicate column attribute in T1 is T1.C2, and column identifiers of columns whose column attribute information is the target selection column attribute are T1.C3 and T1.C5. A column identifier of a column whose column attribute information is the local predicate column attribute in T2 is T2.C1, a column identifier of a column whose column attribute information is the join predicate column attribute in T2 is T2.C2, and a column identifier of a column whose column attribute information is the target selection column attribute in T2 is T2.C3.

Then, a local predicate column combination corresponding to T1 is {T1.C1, T1.C4}, and a local predicate column combination corresponding to T2 is {T2.C1}.

Operation 212: Add a column identifier of a column whose column attribute information is the join predicate column attribute in the $j^{th}$ table to a join predicate column combination corresponding to the $j^{th}$ table.

Following the foregoing example, a join predicate column combination corresponding to T1 is {T1.C2}, and a join predicate column combination corresponding to T2 is {T2.C2}.

Operation 213: Add a column identifier of a column whose column attribute information is the target selection column attribute in the $j^{th}$ table to a target selection column combination corresponding to the $j^{th}$ table.

Still following the foregoing example, a target selection column combination corresponding to T1 is {T1.C3, T1.C5}, and a target selection column combination corresponding to T2 is {T2.C3}.

Operation 214: Determine whether the local predicate column combination and the join predicate column combination satisfy a first merging condition.

The first merging condition is that local materialization does not need to be performed, that is, the column of the local predicate column attribute does not need to be separately processed. In some embodiments, a first determining result of an optimizer on whether local materialization needs to be performed is acquired. When the first determining result indicates that local materialization does not need to be performed, there is no column of local predicate column attributes that need to be processed separately, that is, the local predicate column combination and the join predicate column combination satisfy the first merging condition. Operation 215 is performed when the local predicate column combination and the join predicate column combination satisfy the first merging condition. Operation 2111 is performed when the local predicate column combination and the join predicate column combination do not satisfy the first merging condition.

Operation 215: Merge the local predicate column combination and the join predicate column combination to obtain a first merged combination.

In some embodiments, the local predicate column combination and the join predicate column combination may be combined in ascending order of the column identifiers, or the local predicate column combination and the join predicate column combination may be randomly combined.

Illustratively, assuming that the local predicate column combination of T1 and the join predicate column combination satisfy the first merging condition, the local predicate column combination corresponding to T1 is {T1.C1, T1.C4}, and the join predicate column combination corresponding to T1 is {T1.C2}, the local predicate column combination and the join predicate column combination are combined in ascending order of the column identifiers to obtain that a first merged combination corresponding to T1 is {T1.C1, T1.C2, T1.C4}. The local predicate column combination and the join predicate column combination are randomly combined to obtain the first merged combination {T1.C1, T1.C4, T1.C2} corresponding to T1.

Assuming that the local predicate column combination of T2 and the join predicate column combination do not satisfy the first merging condition, the local predicate column combination of T2 and the join predicate column combination are not merged.

Operation 216: Determine whether the first merged combination and the target selection column combination satisfy a second merging condition.

The second merging condition may be that late materialization is not required, that is, there is no target selection column that needs to be processed separately. Similar to operation 214, a second determining result of the optimizer on whether late materialization needs to be performed is acquired. When the second determining result indicates that late materialization does not need to be performed, the first merged combination and the target selection column combination satisfy the second merging condition. Operation 217 is performed when the first merged combination and the target selection column combination satisfy the second merging condition. Operation 219 is performed when the first merged combination and the target selection column combination do not satisfy the second merging condition.

Operation 217: Merge the first merged combination and the target selection column combination to obtain a basic column combination of the $j^{th}$ table.

In some embodiments, the first merged combination and the target selection column combination may be merged in ascending order of the column identifiers, or the first merged combination and the target selection column combination may be randomly merged.

Illustratively, assuming that the first merged combination of T1 and the target selection column combination satisfy the second merging condition, the first merged combination of T1 is {T1.C1, T1.C2, T1.C4}, and the target selection column combination is {T1.C3, T1.C5}, the first merged combination and the target selection column combination are merged in ascending order of the column identifiers to obtain that the basic column combination of T1 is {T1.C1, T1.C2, T1.C3, T1.C4, T1.C5}. The first merged combination and the target selection column combination are randomly merged to obtain the basic column combination {T1.C1, T1.C2, T1.C4, T1.C3, T1.C5} of T1.

Operation 218: Add the basic column combination of the $j^{th}$ table to the basic column combination set of the $j^{th}$ table.

For T1, there is only one basic column combination, and a basic column combination set of T1 is {{T1.C1, T1.C2, T1.C4, T1.C3, T1.C5}}.

Operation 219: Determine the first merged combination and the target selection column combination as basic column combinations of the $j^{th}$ table.

Illustratively, assuming that the first merged combination of T1 and the target selection column combination do not satisfy the second merging condition, basic column combinations of T1 are {T1.C1, T1.C2, T1.C4} and {T1.C3, T1.C5}.

Operation 2110: Add the basic column combinations of the $j^{th}$ table to the basic column combination set of the $j^{th}$ table.

Following the example in operation 219, in this case, the basic column combination set of T1 includes two elements, i.e., {{T1.C1, T1.C2, T1.C4} and {T1.C3, T1.C5}}.

Operation 2111: Determine whether the join predicate column combination and the target selection column combination satisfy the second merging condition.

In some embodiments, when the local predicate column combination and the join predicate column combination do not satisfy the first merging condition, it may be determined that when the join predicate column combination and the target selection column combination satisfy the second merging condition, operation 2112 is performed, and when the join predicate column combination and the target selection column combination do not satisfy the second merging condition, operation 2115 is performed.

Operation 2112: Merge the join predicate column combination and the target selection column combination to obtain a second merged combination.

For example, assuming that the local predicate column combination and the join predicate column combination of T2 do not satisfy the first merging condition, but the join predicate column combination and the target selection column combination of T2 satisfy the second merging condition, the join predicate column combination {T2.C2} and the target selection column combination {T2.C3} of T2 are merged to obtain a second merged combination {T2.C2, T2.C3}.

Operation 2113: Determine the local predicate column combination and the second merged combination as basic column combinations of the $j^{th}$ table.

Assuming that the local predicate column combination of T2 is {T2.C1}, there are two basic column combinations of T2, i.e., {T2.C1} and {T2.C2, T2.C3}.

Operation 2114: Add the basic column combinations of the $j^{th}$ table to the basic column combination set of the $j^{th}$ table.

Following the example in operation 2113, a basic column combination set of T2 is {{T2.C1}, {T2.C2, T2.C3}}.

Operation 2115: Determine the local predicate column combination, the join predicate column combination, and the target selection column combination as basic column combinations of the j$^{th}$ table.

In some embodiments, when the local predicate column combination and the join predicate column combination do not satisfy the first merging condition, and the join predicate column combination and the target selection column combination do not satisfy the second merging condition, the three column combinations are not merged, that is, the local predicate column combination, the join predicate column combination, and the target selection column combination are determined as basic column combinations of the j$^{th}$ table.

Operation 2116: Add the basic column combinations of the j$^{th}$ table to the basic column combination set of the j$^{th}$ table.

In some embodiments, if the local predicate column combination, the join predicate column combination, and the target selection column combination of the j$^{th}$ table are merged, the basic column combination set of the j$^{th}$ table includes three basic column combinations.

Since column data of the same column attribute is generally accessed simultaneously, in operation 211 to operation 2116, the local predicate column combination, the join predicate column combination, and the target selection column combination are first constructed from column identifiers of the same column attribute, and then the local predicate column combination and the join predicate column combination are merged according to the preset first merging condition and the preset second merging condition. When the first merging condition or the second merging condition is satisfied, the local predicate column combination does not need to be separately stored or the target selection column combination does not need to be separately stored, which ensures that column data in a determined basic column combination of each table can be merged and stored, thereby ensuring the accuracy of optimized storage.

Still referring to FIG. 5, the description continues with operation 1021.

Operation 1022: Determine whether the basic column combination set of the j$^{th}$ table related to the i$^{th}$ query request includes only one basic column combination.

When the basic column combination set of the j$^{th}$ table related to the i$^{th}$ query request includes one basic column combination, operation 1023 is performed. When the basic column combination set of the j$^{th}$ table related to the i$^{th}$ query request includes at least two basic column combinations, operation 1024 is performed.

Operation 1023: Determine the basic column combination as a candidate column combination of the j$^{th}$ table.

Herein, when there is only one basic column combination in the basic column combination set of the j$^{th}$ table, query overheads do not need to be compared, and the basic column combination is directly determined as the candidate column combination of the j$^{th}$ table.

Operation 1024: Merge the at least two basic column combinations of the j$^{th}$ table to obtain at least one merged basic column combination of the j$^{th}$ table.

In some embodiments, assuming that there are T basic column combinations in the j$^{th}$ table, where T is a positive integer greater than or equal to 2, any two basic column combinations in the j$^{th}$ table are merged to obtain $C_T^2$ merged basic column combinations, any three basic column combinations in the j$^{th}$ table are merged to obtain $C_T^3$ merged basic column combinations, and so on. T basic column combinations in the j$^{th}$ table are merged to obtain $C_T^T$ merged basic column combinations. That is, when there are T basic column combinations in the j$^{th}$ table, a total of $C_T^2 + C_T^3 + ... + C_T^T$ merged basic column combinations can be obtained.

Operation 1025: Determine whether the total number N of tables related to the i$^{th}$ query request is 1.

When N is 1 and the basic column combination set of the j$^{th}$ table includes at least two basic column combinations, operation 1026 is performed. When N is greater than 1 and the basic column combination set of the j$^{th}$ table includes at least two basic column combinations, operation 10212 is performed.

Operation 1026: Determine, in a case that table data of the j$^{th}$ table is stored according to the at least two basic column combinations, a first reference overhead for executing the i$^{th}$ query request.

In some embodiments, storing the table data of the j$^{th}$ table according to the at least two basic column combinations refers to storing column data corresponding to column identifiers included in the basic column combinations in the j$^{th}$ table into one file. Illustratively, T1 corresponds to two basic column combinations, i.e., {T1.C1, T1.C2, T1.C4} and {T1.C3, T1.C5}. In this case, column data of C1, C2, and C4 in T1 is stored in one file, and column data of C3 and C5 is stored in one file. Then, the i$^{th}$ query request is performed according to different access paths to obtain candidate query overheads, and the minimum candidate query overhead is determined as the first reference overhead of the i$^{th}$ query request.

That is, the first reference overhead of the i$^{th}$ query request is a candidate query overhead corresponding to an optimal access path. A process of determining the first reference overhead of the i$^{th}$ query request is a process of determining the optimal access path. In some embodiments, the optimal access path may be determined using a database optimizer. When a query request is executed, a reading function of one piece of data may be implemented using a plurality of paths. For example, for queries of the same record, a database may screen data using an index, which may be referred to as index scanning. For a multi-index data table, for different indexes, access paths have a plurality of ways to select for different indexes. Alternatively, the database may read data by scanning a full table instead of using an index. When the optimal access path is selected using the database optimizer, a query path tree is generated based on the query statement according to an internal standard algorithm, then reading overheads of all access paths that may acquire the required data in the query path tree are estimated, and estimated overheads of all paths are compared to select an access path with the minimum overhead as the optimal access path, thereby improving the access efficiency.

In some embodiments, candidate query overheads for executing the $i^{th}$ query request according to a data access path include overheads for reading table data of tables related to the $i^{th}$ query request according to the data access path. The overhead for reading column data includes an I/O overhead and a CPU overhead, where the I/O overhead further includes a file opening overhead, a random reading overhead, and a sequential reading overhead. The CPU overhead further includes a basic overhead, a page reading overhead, a page scanning overhead, and a scanning recording overhead.

Operation 1027: Determine, in a case that the table data of the $j^{th}$ table is stored according to merged basic column combinations, first query overheads for executing the $i^{th}$ query request.

In some embodiments, when operation 1027 is implemented, in a case that the table data of the $j^{th}$ table is stored according to a $k^{th}$ merged basic column combination, corresponding path overheads for executing the $i^{th}$ query request according to a plurality of different access paths are first determined. That is, each access path corresponds to one path overhead. When the $i^{th}$ query request has three different access paths, the query request corresponds to three path overheads. $k = 1, ..., P$, and P is a total number of merged basic column combinations of the $j^{th}$ table. In addition, a minimum path overhead in the path overheads corresponding to the $k^{th}$ merged basic column combination is determined as the first query overhead for executing the $i^{th}$ query request when the table data of the $j^{th}$ table is stored according to the $k^{th}$ merged basic column combination.

Illustratively, assuming that there are three basic column combinations of T1, i.e., {T1.C1, T1.C4}, {T1.C2}, and {T1.C3, T1.C5}, four merged basic column combinations are obtained: {T1.C1, T1.C2, T1.C4}, {T1.C1, T1.C4, T1.C3, T1.C5}, {T1.C2, T1.C3, T1.C5}, and {T1.C1, T1.C4, T1.C2, T1.C3, T1.C5}. Then, path overheads for executing the $i^{th}$ query request according to different paths for the merged basic column combinations are calculated using the database optimizer, and a minimum path overhead is determined as the first query overhead for executing the query request when the table data is stored according to the merged basic column combinations.

The merged basic column combination is {T1.C1, T1.C4, T1.C3, T1.C5}. Assuming that there are three different data access paths, path overheads when the merged basic column combination executes the query request according to different data access paths are determined using the database optimizer, and a minimum path overhead of the three path overheads is determined as a first query overhead of the merged basic column combination {T1.C1, T1.C4, T1.C3, T1.C5}.

Operation 1028: Determine a first minimum query overhead among the first query overheads.

In some embodiments, the first minimum query overhead among the first query overheads may be determined through a preset sorting algorithm.

Illustratively, the sorting algorithm may be a bubble sorting algorithm, an insertion sorting algorithm, or the like. In the embodiments of this application, an actually used sorting algorithm is not limited.

Operation 1029: Determine whether the first minimum query overhead is less than the first reference overhead.

When the first minimum query overhead is less than the first reference overhead, operation 10210 is performed. When the first minimum query overhead is greater than or equal to the first reference overhead, operation 10211 is performed.

Operation 10210: Determine a merged basic column combination corresponding to the first minimum query overhead as the candidate column combination of the $j^{th}$ table.

In some embodiments, when the first minimum query overhead is less than the first reference overhead, a better storage effect and smaller query overhead may be achieved when the table data of the $j^{th}$ table is stored using the merged basic column combination. In this case, the merged basic column combination corresponding to the first minimum query overhead is determined as the candidate column combination of the $j^{th}$ table.

Operation 10211: Determine the at least two basic column combinations as candidate column combinations of the $j^{th}$ table.

In some embodiments, when the first minimum query overhead is greater than or equal to the first reference overhead, a better storage effect and smaller query overhead than that before the basic column combinations are merged cannot be achieved when the table data of the $j^{th}$ table is stored using the merged basic column combination. In this case, the at least two basic column combinations are determined as the candidate column combinations of the $j^{th}$ table.

Operation 10212: Merge, when another table including at least two basic column combinations exists in N tables, the at least two basic column combinations of the another table to obtain at least one merged basic column combination of the another table.

In some embodiments, when there are at least two tables related to the $i^{th}$ query request, and the $j^{th}$ table corresponds to at least two basic column combinations, the at least two basic column combinations corresponding to the $j^{th}$ table are first merged, and then whether there is another table including at least two basic column combinations besides the $j^{th}$ table in the N tables is determined. If there is another table including at least two basic column combinations besides the $j^{th}$ table, at least two basic column combinations of the another table are merged to obtain at least one merged basic column

An implementation process of merging the at least two basic column combinations of the another table is similar to the implementation process of operation 1024 and may refer to the implementation process of operation 1204.

In some embodiments, when there is no other table including at least two basic column combinations besides the jth table in the N tables, that is, all other tables except the jth table in the N tables include only one basic column combination, basic column combinations of these tables do not need to be merged. In this case, operation 10214 continues to be performed.

Operation 10213: Determine, in a case that table data of the N tables is stored according to corresponding basic column combinations, a second reference overhead for executing the ith query request.

In some embodiments, when the ith query request is executed, data of N tables related to the ith query request is accessed. Therefore, in this operation, in a case that the table data of the N tables are stored according to the corresponding basic column combinations, path overheads for executing the ith query request according to different access paths need to be determined, and then a minimum path overhead is determined as the second reference overhead corresponding to the ith query request.

Operation 10214: Determine, in a case that table data of tables each including at least two basic column combinations in the N tables is stored according to corresponding merged basic column combinations, and table data of tables each including one basic column combination is stored according to corresponding basic column combinations, second query overheads for executing the ith query request.

In some embodiments, assuming that there are A tables including at least two basic column combinations in the N tables, i.e., T1 to TA, where A is an integer less than or equal to N, T1 corresponds to $B_1$ merged basis column combinations, T2 corresponds to $B_2$ merged basis column combinations, ..., and TA corresponds to $B_A$ merged basis column combinations, table data of the tables including at least two basic column combinations in the N tables is stored according to corresponding merged basic column combinations, and table data of tables including one basic column combination is stored according to corresponding basic column combinations. There are $B_1*B_2*...*B_A$ storage manners. Assuming that there are three different execution paths for executing the ith query request, three path overheads are determined for each storage manner, and a minimum path overhead of the three path overheads for each storage manner is determined as a second query overhead for storing the table data according to the storage manner and executing the ith query request. That is, in operation 10215, $B_1*B_2*...*B_A$ second query overheads are determined.

Illustratively, there are three tables related to the ith query request, which are T1, T2, and T3, respectively.

T1 corresponds to three basic column combinations, T2 corresponds to two basic column combinations, and T3 corresponds to one basic column combination. Thus, T1 corresponds to four merged basic column combinations, T2 corresponds to one merged basic column combination, and T3 corresponds to one basic column combination. Therefore, T1, T2, and T3 have 4*1 storage manners in total. Four second query overheads may be determined in operation 10214.

Illustratively, T1 corresponds to four merged basic column combinations, i.e., {T1.C1, T1.C2, T1.C4}, {T1.C1, T1.C4, T1.C3, T1.C5}, {T1.C2, T1.C3, T1.C5}, and {T1.C1, T1.C4, T1.C2, T1.C3, T1.C5}. T2 corresponds to one merged basic column combination, i.e., {T2.C1, T2.C2, T2.C3}. T3 corresponds to one basic column combination, i.e., {T3.C3, T3.C5}. Therefore, when the ith query request is executed, T1, T2, and T3 have four storage manners.

A first manner is that: T1 is merged and stored according to {T1.C1, T1.C2, T1.C4}, T2 is merged and stored according to {T2.C1, T2.C2, T2.C3}, and T3 is merged and stored according to {T3.C3, T3.C5}.

A second manner is that: T1 is merged and stored according to {T1.C1, T1.C4, T1.C3, T1.C5}, T2 is merged and stored according to {T2.C1, T2.C2, T2.C3}, and T3 is merged and stored according to {T3.C3, T3.C5}.

A third manner is that: T1 is merged and stored according to {T1.C2, T1.C3, T1.C5}, T2 is merged and stored according to {T2.C1, T2.C2, T2.C3}, and T3 is merged and stored according to {T3.C3, T3.C5}.

A fourth manner is that: T1 is merged and stored according to {T1.C1, T1.C4, T1.C2, T1.C3, T1.C5}, T2 is merged and stored according to {T2.C1, T2.C2, T2.C3}, and T3 is merged and stored according to {T3.C3, T3.C5}.

Then, second query overheads corresponding to the foregoing four storage manners are determined. Illustratively, a second query overhead corresponding to the first storage manner is 1 second, a second query overhead corresponding to the second storage manner is 0.8 seconds, a second query overhead corresponding to the third storage manner is 2 seconds, and a second query overhead corresponding to the fourth storage manner is 1.2 seconds.

Operation 10215: Determine a second minimum query overhead among the second query overheads.

In some embodiments, an implementation process of operation 10215 is similar to the implementation process of operation 1028 and may be implemented with reference to the implementation process of operation 1028.

Following the example of operation 10214, the second minimum query overhead is 0.8 seconds.

Operation 10216: Determine whether the second minimum query overhead is less than the second reference overhead.

When the second minimum query overhead is less than the second reference overhead, operation 10217 is performed. When the second minimum query overhead is greater than or equal to the second reference overhead, operation 10218 is performed.

Operation 10217: Determine column combinations of tables corresponding to the second minimum query overhead as the candidate column combinations of the tables.

When the second minimum query overhead is less than the second reference overhead, a better storage effect and smaller query overhead may be achieved when the table data of the tables is stored using the column combinations of the tables corresponding to the second minimum query overhead. In this case, the column combinations of the tables corresponding to the second minimum query overhead are determined as the candidate column combinations of the table.

Illustratively, assuming that the second reference overhead is 1 second, the second minimum query overhead is 0.8 seconds, and the second minimum query overhead is less than the second reference overhead, the column combinations of the tables corresponding to the second minimum query overhead are determined as the corresponding candidate column combinations. The second minimum query overhead corresponds to the foregoing second storage manner. Therefore, a candidate column combination of T1 is {T1.C2, T1.C3, T1.C5}, a candidate column combination of T2 is {T2.C1, T2.C2, T2.C3}, and a candidate column combination of T3 is {T3.C3, T3.C5}.

Operation 10218: Determine basic column combinations of the tables as the candidate column combinations of the tables.

When the second minimum query overhead is greater than or equal to the second reference overhead, a better storage effect and smaller query overhead than that before merging cannot be achieved when the table data of the tables using the column combinations of the tables corresponding to the second minimum query overhead. Therefore, the basic column combinations of the tables are directly determined as the candidate column combinations of the tables.

In operation 1021 to operation 10218, determining the candidate column combinations of the $j^{th}$ table when the $j^{th}$ table has only one basic column combination, the $j^{th}$ table includes at least two basic column combinations and there is only one table related to the $i^{th}$ query request, and the $j^{th}$ table includes at least two basic column combinations and there are at least two tables related to the $i^{th}$ query request is separately described. In this way, it can be ensured that in various cases, the candidate column combinations of the tables when the $i^{th}$ query request is executed to achieve the minimum query overhead are accurately determined.

Still referring to FIG. 4, the description continues with operation 102.

Operation 103: Determine, based on a plurality of candidate column combinations belonging to one of tables related to the plurality of query requests, respective target column combinations of the tables.

In operation 102, a single query request is used as granularity to determine the candidate column combinations of the tables when the query overhead of each query request can be minimum. An application may receive a plurality of different query requests, different query requests may relate to the same table, and the same table may correspond to different candidate column combinations for different query requests. However, the same table can be stored only in one storage manner. In this case, to achieve a minimum total query overhead at an entire application level, the target column combinations of the tables need to be determined. When the table data of the tables is stored according to respective target column combinations, a total query overhead for executing the plurality of query requests can be minimum.

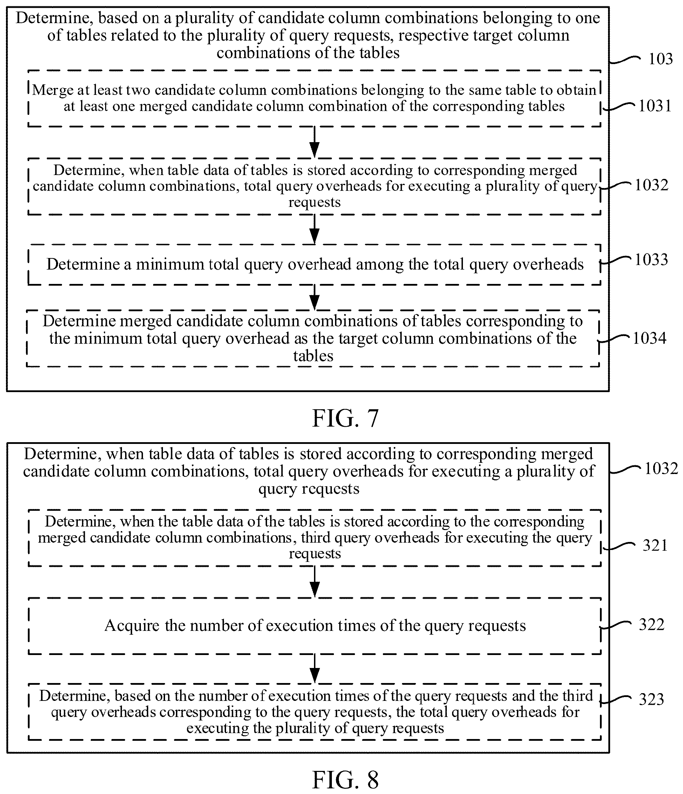

In some embodiments, referring to FIG. 7, operation 103 may be implemented through the following operation 1031 to operation 1034, which are specifically described below.

Operation 1031: Merge at least two candidate column combinations belonging to the same table to obtain at least one merged candidate column combination of the corresponding tables.

In some embodiments, the candidate column combinations of the tables related to the query requests are determined in operation 102. Since different query requests may relate to the same table, the same table may correspond to a plurality of candidate column combinations. Therefore, in this operation, at least two candidate column combinations belonging to the same table are merged to obtain at least one merged candidate column combination of the tables.

An implementation process of merging at least two candidate column combinations belonging to the same table is similar to the implementation process of operation 1205 and may refer to the implementation process of operation 1205.

To simplify an example, assuming that there are three query requests in total, tables related to a first query request include T1, T2, and T3, tables related to a second query request include T2 and T3, and tables related to a third query request include T1 and T3. A candidate column combination of the table T1 related to the first query request is {T1.C2, T1.C3, T1.C5}, a candidate column combination of the table T2 related to the first query request is {T2.C1, T2.C2, T2.C3}, and a candidate column combination of the table T3 related to the first query request is {T3.C3, T3.C5}. A candidate column combination of the table T2 related to the second query request is {T2.C1, T2.C4}, and a candidate column combination of the table T3 related to the second query request is {T3.C4, T3.C5}. A candidate column combination of the table T1 related to the third query request is {T1.C2, T1.C6}, and a candidate column combination of the table T3 related to the third query request is {T3.C1, T3.C2}. Therefore, T1 has two candidate column combinations: {T1.C2, T1.C3, T1.C5} and {T1.C2, T1.C6}. T2 has two candidate column combinations: {T2.C1, T2.C2, T2.C3} and {T2.C1, T2.C4}. T3 has three candidate column combinations: {T3.C3, T3.C5}, {T3.C4, T3.C5}, and {T3.C1, T3.C2}. Two candidate column combinations of T1 are merged to obtain a merged candidate column combination: {T1.C2, T1.C3, T1.C5, T1.C6}, two candidate column combinations of T2 are merged to obtain a merged candidate column combination: {T2.C1, T2.C2, T2.C3, T2.C4}, and three candidate column combinations of T3 are merged to obtain four merged candidate column combinations: {T3.C3, T3.C4, T3.C5}, {T3.C1, T3.C2, T3.C4, T3.C5}, {T3.C1, T3.C2, T3.C3, T3.C5}, and {T3.C1, T3.C2, T3.C3, T3.C4, T3.C5}.

Operation 1032: Determine, in a case that the table data of the tables is stored according to corresponding merged candidate column combinations, total query overheads for executing the plurality of query requests.

In some embodiments, as shown in FIG. 8, operation 1032 may be implemented through the following operation 321 to operation 323, which are specifically described below.

Operation 321: Determine, when the table data of the tables is stored according to the corresponding merged candidate column combinations, third query overheads for executing the query requests.

In some embodiments, assuming that there are Q tables related to a plurality of query requests in total, T1 corresponds to $D_1$ merged candidate column combinations, T2 corresponds to $D_2$ merged candidate column combinations, ..., and TQ corresponds to $D_Q$ merged candidate column combinations, there are a total of $D_1*D_2*..., *D_Q$ storage manners for storing the table data of the tables according to corresponding merged candidate column combinations. Then, in a case that the tables are stored according to the storage manners, path overheads for executing the query requests according to different access paths are determined, and a minimum path overhead is determined as the third query overhead of the query request.

When there are $D_1* D_2*..., *D_Q$ storage manners, each query request corresponds to $D_1* D_2*..., *D_Q$ third query overheads.

Operation 322: Acquire the number of execution times of the query requests.

In some embodiments, the number of execution times of the query requests may refer to the number of execution times of the query requests within a preset historical duration.

Operation 323: Determine, based on the number of execution times of the query requests and the third query overheads corresponding to the query requests, the total query overheads for executing the plurality of query requests.

In some embodiments, the number of execution times of the query requests is multiplied by the third query overheads corresponding to the query requests to obtain products, and then the products are added to obtain a total query overhead for executing a plurality of query requests.

Following the foregoing example, assuming that there are M query requests, a third query overhead and the number of execution times corresponding to the M query requests in each storage manner are acquired, and then the third query overhead is multiplied by the corresponding number of execution times to obtain a total query overhead in this storage manner. If there are $D_1* D_2*..., *D_Q$ storage manners, $D_1* D_2*..., *D_Q$ total query overheads are obtained in this operation.

Illustratively, assuming that there are three query requests and four storage manners in total, the number of execution times of the three query requests is 100, 500, and 300. In a first storage manner, a third query overhead of a first query request is 1 second, a third query overhead of a second query request is 0.8 seconds, and a third query overhead of a third query request is 2 seconds. Therefore, in the first storage manner, a total query overhead is 1*100+0.8*500+2*300 = 1,100 seconds. It is assumed that, in this manner, a total query overhead corresponding to a second storage manner is determined to be 800 seconds, a total query overhead corresponding to a third storage manner is determined to be 1,200 seconds, and a total query overhead corresponding to a fourth storage manner is determined to be 1,500 seconds.

Operation 1033: Determine a minimum total query overhead among the total query overheads.

In some embodiments, the minimum total query overhead among the total query overheads may be determined according to a preset sorting algorithm. Illustratively, the minimum total query overhead is 800 seconds.

Operation 1034: Determine merged candidate column combinations of tables corresponding to the minimum total query overhead as the target column combinations of the tables.

Illustratively, the minimum total query overhead corresponds to the second storage manner, and then the merged candidate column combinations of the tables in the second storage manner are determined as the target column combinations of the tables. Assuming that in the second storage manner, a merged candidate column combination of T1 is {T1.C2, T1.C3, T1.C5, T1.C6}, a merged candidate column combination of T2 is {T2.C1, T2.C2, T2.C3, T2.C4}, and a merged candidate column combination of T3 is {T3.C1, T3.C2, T3.C4, T3.C5}, a target column combination of T1 is {T1.C2, T1.C3, T1.C5, T1.C6}, a target column combination of T2 is {T2.C1, T2.C2, T2.C3, T2.C4}, and a target column combination of T3 is {T3.C1, T3.C2, T3.C4, T3.C5}.

An application may receive a plurality of different query requests, different query requests may relate to the same table, and the same table may correspond to different candidate column combinations for different query requests. However, the same table can be stored only in one storage manner. In this case, through operation 1031 to operation 1034, candidate column combinations belonging to the same table are merged to obtain merged candidate column combinations of the tables, then total query overheads for executing the plurality of query requests when the table data of the tables is stored according to corresponding merged candidate column combinations are obtained, and the merged candidate column combinations of the tables corresponding to the minimum total query overhead are determined as the target column combinations of the tables. In this way, when the table data of the tables is stored according to respective target column combinations, a minimum total query overhead can be satisfied at an entire application level, and it can be ensured that the determined target column combinations of the tables are adaptive to data features of the application.

That is, in operation 103, in an application dimension, the target column combinations of the tables when the query overhead for executing a plurality of query requests is minimum are determined. The target column combination is a column combination that is often accessed simultaneously when a query request is executed. For different applications, different target column combinations may be accessed simultaneously during the execution of the query requests. In the embodiments of this application, a target column combination that can achieve optimal storage in the application dimension and conforms to the application data access characteristic is determined according to a plurality of query requests for each application and the table data related to the query requests, thereby achieving self-adaptability between the target column combination and the application data access characteristic and improving the robustness of the data storage method provided in the embodiments of this application.

Still referring to FIG. 4, the description continues with operation 103.

Operation 104: Store the table data of the tables according to the respective target column combinations such that a total query overhead for executing the plurality of query requests is minimum.

In some embodiments, assuming that a table 1 (T1) has ten columns of data in total, ten columns of T1 are T1.C1, T1.C2, T1.C3, T1.C4, T1.C5, T1.C6, T1.C7, T1.C8, T1.C9, and T1.C10, and target column combinations of T1 are {T1.C2, T1.C3, T1.C5, T1.C6} and {T1.C1, T1.C4, T1.C7} and are not sparse target column combinations. Column data of the four columns of T1.C2, T1.C3, T1.C5, and T1.C6 is stored in the same file, column data of the three columns of T1.C1, T1.C4, and T1.C7 is stored in the same file, and column data of T1.C8, T1.C9, and T1.C10 is each stored in one file.

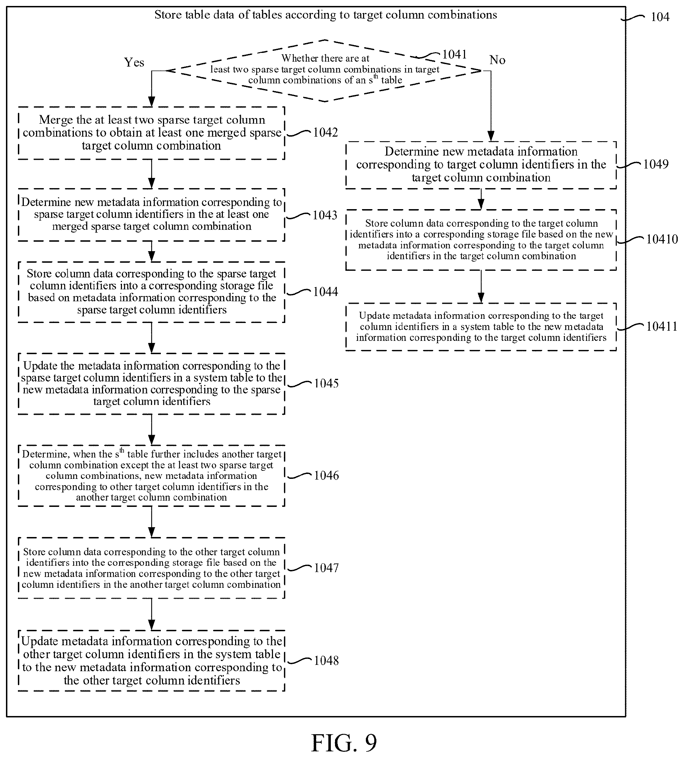

In some embodiments, referring to FIG. 9, operation 104 may be implemented through the following operation 1041 to operation 10411, which are specifically described below.

Operation 1041: Determine whether there are at least two sparse target column combinations in target column combinations of a $s^{th}$ table.

s = 1, 2, ..., Q, and Q is a total number of tables that need to be optimized. In some embodiments, when it is determined whether the target column combination of the $s^{th}$ table is a sparse target column combination, column identifiers in the target column combination are first acquired, and then the number of pieces of null data and the number of pieces of total data in column data corresponding to the column identifiers are acquired. Ratios of the number of pieces of null data to the number of pieces of total data corresponding to the column identifiers are determined as sparsity values corresponding to the column identifiers, and a column corresponding to a column identifier whose sparsity value is greater than a preset sparsity threshold is determined as a sparse column. When columns corresponding to column identifiers in one target column combination are all sparse columns, the target column combination is determined as a sparse target column combination. Illustratively, a target column combination is {T1.C1, T1.C4, T1.C7}. Assuming that the number of pieces of null data corresponding to the column identifier T1.C1 is 3, and the number of pieces of total data is 50, a sparsity value corresponding to the column identifier is 0.06. The number of pieces of null data corresponding to T1.C4 is 5, and the number of pieces of total data is 50. Thus, a sparsity value corresponding to the column identifier is 0.1. The number of pieces of null data corresponding to T1.C7 is 6, and the number of pieces of total data is 50. Thus, a sparsity value corresponding to the column identifier is 0.12. Assuming that the sparsity threshold is 0.15, columns corresponding to T1.C1, T1.C4, and T1.C7 are all sparse columns, that is, the target column combination is a sparse target column combination.

It is sequentially determined whether the target column combinations in the $s^{th}$ table are sparse target column combinations. When there are at least two sparse target column combinations in the target column combinations of the $s^{th}$ table, operation 1042 is performed. When the target column combinations of the $s^{th}$ table do not include at least two sparse target column combinations, operation 1049 is performed.

Operation 1042: Merge the at least two sparse target column combinations to obtain at least one merged sparse target column combination.

In some embodiments, when the at least two sparse target column combinations are merged, a size of space occupied by the sparse target column combinations and a file size of a storage file are first acquired to determine, based on the file size, the number of sparse target column combinations that can be stored in each storage file, and merge the sparse target column combinations in the $s^{th}$ table based on the number of sparse target column combinations that can be stored in each storage file.

Illustratively, if the number of sparse target column combinations that can be stored in each storage file is 2, and there are three sparse target column combinations in the s<sup>th</sup> table, two sparse target column combinations are randomly selected from the three sparse target column combinations for merging to obtain a merged sparse target column combination, and the remaining sparse target column combination that is not merged is stored according to a conventional target column combination.

Operation 1043: Determine new metadata information corresponding to sparse target column identifiers in the at least one merged sparse target column combination.

The new metadata information includes a file identifier, a file format, and a storage location of a storage file corresponding to column data.

Operation 1044: Store column data corresponding to the sparse target column identifiers into a corresponding storage file based on metadata information corresponding to the sparse target column identifiers.

In some embodiments, to ensure a normal response when a query request is received during data storage, when the column data corresponding to the sparse target column identifiers is stored into the corresponding storage file, the column data corresponding to the sparse target column identifiers is copied to the corresponding storage file.

Operation 1045: Update the metadata information corresponding to the sparse target column identifiers in a system table to the new metadata information corresponding to the sparse target column identifiers.

In some embodiments, after the column data corresponding to the sparse target column identifiers is stored into the corresponding storage file, to execute a query request in a new storage manner when the query request is subsequently received, metadata information corresponding to the sparse target column identifiers that is originally stored in the system table needs to be deleted, and the new metadata information corresponding to the sparse target column identifiers needs to be stored into the system table.

Operation 1046: Determine, when the s<sup>th</sup> table further includes another target column combination except the at least two sparse target column combinations, new metadata information corresponding to other target column identifiers in the another target column combination.

In some embodiments, the new metadata information corresponding to other target column identifiers in the another target column combination includes a file identifier, a file format, and a storage location of a storage file corresponding to column data of other target column identifiers.

Operation 1047: Store column data corresponding to the other target column identifiers into the corresponding storage file based on the new metadata information corresponding to the other target column identifiers in the another target column combination.

In some embodiments, an implementation process of operation 1047 is similar to the implementation process of operation 1044 and may be implemented with reference to the implementation process of operation 1044.

Operation 1048: Update metadata information corresponding to the other target column identifiers in the system table to the new metadata information corresponding to the other target column identifiers.

In some embodiments, an implementation process of operation 1048 is similar to the implementation process of operation 1045 and may be implemented with reference to the implementation process of operation 1045.

Operation 1049: Determine new metadata information corresponding to target column identifiers in the target column combination.

Operation 10410: Store column data corresponding to the target column identifiers into the corresponding storage file based on metadata information corresponding to the target column identifiers.

Operation 10411: Update the metadata information corresponding to the target column identifiers in the system table to the new metadata information corresponding to the target column identifiers.

In some embodiments, when at least two sparse target column combinations do not exist in the s<sup>th</sup> table, the target column combinations do not need to be merged again, and data of the s<sup>th</sup> table is directly stored through operation 1049 to operation 10411. Implementation processes of operation 1049 to operation 10411 are similar to implementation processes of operation 1043 to operation 1045 and may refer to the implementation processes of operation 1043 to operation 1045.

In operation 1041 to operation 10411, when there are at least two sparse target column combinations in target column combinations of a to-be-optimized table, the at least two sparse target column combinations are merged, and a merged sparse target column combination is stored into one file. Thus, the storage space utilization of the file can be improved. If at least two sparse target column combinations do not exist in the target column combinations of the to-be-optimized table, optimized storage is performed according to the target column combinations determined in operation 103, that is, column data corresponding to column identifiers included in the target column combinations is stored into one file, and metadata information of the tables is correspondingly modified. In addition, during data storage, the data is stored piecewise, that is, optimized storage is performed on one table each time, thereby reducing the complexity of optimized storage. In addition, after optimized storage of one table is completed, original data of the table before optimized storage is deleted. After optimized storage of table data of the tables is completed, when a query request is received, a query process is performed based on the table data after optimized storage.

In some embodiments, in the process of performing optimized storage, if a query request transmitted by a client is received, the query request is executed based on table data before optimized storage, thereby avoiding that an incorrect query result is obtained due to incomplete optimized storage of the table data, and ensuring the correctness of the query result.

In the data storage method provided in the embodiments of this application, after the plurality of query requests for the application are acquired, the query requests are parsed to obtain the at least one piece of column information included in each query request or in the query requests. Then, the candidate column combinations of the tables that can reach the minimum query overhead when the query requests are executed on a single query request dimension are determined first, and then the target column combinations of the tables that can reach the minimum total query overhead when the plurality of query requests are executed on an application dimension are determined based on the candidate column combinations so that the table data of the tables is merged and stored according to the corresponding target column combinations. Thus, when the query requests are executed, column data that is frequently accessed simultaneously can be merged and stored in one file, thereby reducing the number of opening times of the file, reducing the query time, and improving the data query efficiency. In addition, during the data storage, the plurality of query requests for the application are adopted for analytical processing, thereby ensuring that a final optimized storage policy can adapt to the application data characteristic.

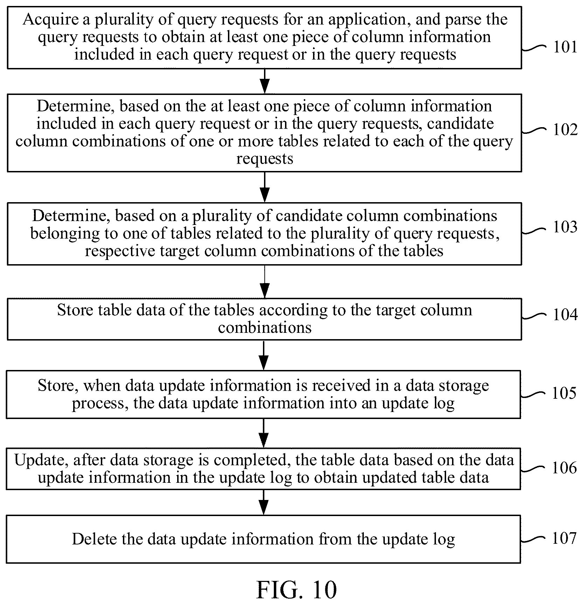

In some embodiments, as shown in FIG. 10, in a process of performing operation 104, if data update information is received, operation 105 to operation 107 may further be performed, which are described below in detail.

Operation 105: Store, when data update information is received in a data storage process, the data update information into an update log.

The data update information may include data deletion information, data modification information, or data addition information.

Operation 106: Update, after data storage is completed, the table data based on the data update information in the update log to obtain updated table data.

In some embodiments, completing data storage refers to optimizing all tables to be optimized and stored in the application. In this case, data update information received in the process of optimized storage may be acquired from the update log, and the table data is updated based on the data update information in the update log to obtain the updated table data.

Illustratively, the data update information is data deletion information, the data deletion information carries location information of to-be-deleted data, and then the to-be-deleted data corresponding to the location information is deleted. The location information includes at least a table identifier, and may further include a column identifier and a row identifier.

Operation 107: Delete the data update information from the update log.

In some embodiments, to avoid updating data again after completing data update based on the data update information, the data update information is deleted from the update log. In this way, the space occupied by the update log can further be reduced.

In operation 105 to operation 107, to avoid omission of being unable to determine whether to update data before optimized storage or to update data after optimized storage, during the data storage process, when the data update information is received, data is not updated in real time. Instead, the data update information is first stored into the update log, and after optimized storage of the data is completed, the table data is updated based on the data update information stored in the update log so that updated table data is accessed when a query request is subsequently performed, thereby ensuring the accuracy of a query result.

Exemplary application of this embodiment of this application in an actual application scene will be described below.

The embodiments of this application provide a data storage method, which dynamically adjusts a columnar storage policy according to a plurality of received query requests and an application data storage feature to achieve an optimal data storage effect and reading efficiency.

In the embodiments of this application, a plurality of query statements are first analyzed to determine columns of tables that appear in the query statements, and determine candidate column combinations of the tables when the minimum query overhead is achieved during the execution of the query statements. Later, the candidate column combinations of the tables are merged again to determine optimal column combinations (corresponding to target column combinations in other embodiments) of the tables when a minimum total query overhead is achieved during the execution of the plurality of query statements. To further improve the storage space utilization, storage optimization of the sparse column is further performed. When one table includes at least two optimal column combinations that are sparse column combinations, the at least two optimal column combinations are merged to obtain at least one merged sparse column combination. Finally, data storage is performed based on the determined optimal column combination manner of each table.

The data storage method provided in the embodiments of this application may be implemented through the following operations, which are described below.

Operation 1: Parse a query statement to determine columns of tables that appear in the query statement, and determine initial column combinations to which the columns that appear in the query statement belong.

The initial column combination includes: a column combination corresponding to a local predicate, a column combination corresponding to a join predicate, and a target selection column combination.

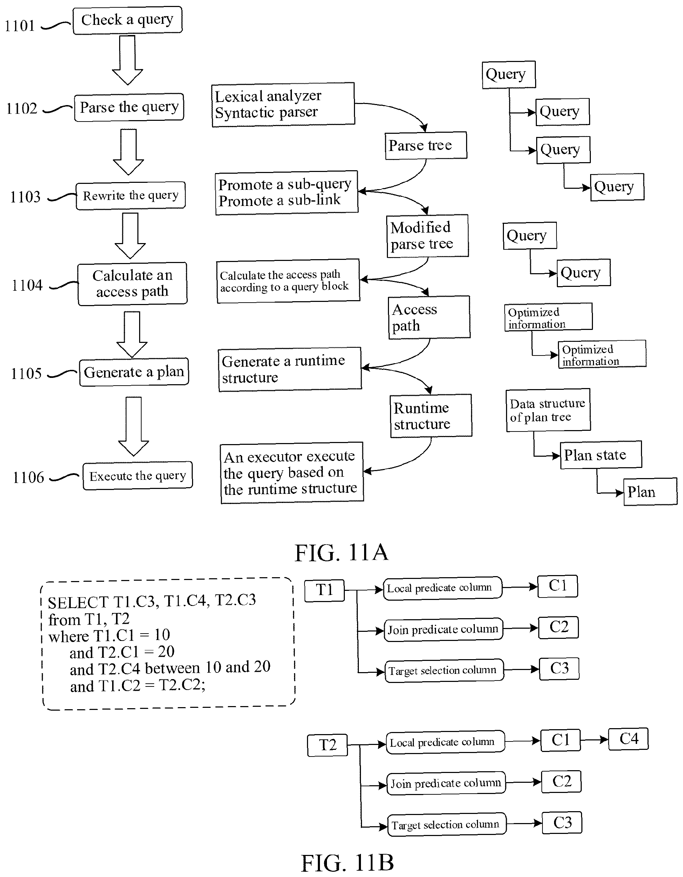

Generally, when a database is queried using the query statement, operation 1101 to operation 1106 shown in FIG. 11A are performed. Descriptions are provided below with reference to FIG. 11A.

Operation 1101: Check a query.

In this operation, it is checked whether a received query request is stored in a system table. If the query request is stored in the system table, optimal storage analysis has been performed on the query request. In this case, no repeated analysis needs to be performed. If the query request is not stored in the system table, optimal storage analysis has not been performed on the query request. In this case, subsequent operations are performed.

Operation 1102: Parse the query.

In some embodiments, the received query statement is parsed to generate a parse tree, and column information included in the query request is recorded according to content of the parse tree.

When a database optimizer performs optimal path calculation, columns at different locations may be used at different times during calculation, and the columns needed during execution of the query statement are divided into:

> a column corresponding to a local predicate: a column containing only one table in a predicate (which may be configured for establishing the materialization of this table);

> a column corresponding to a join predicate: a column containing more than one table in a predicate (usually configured for join calculation); and

> a column corresponding to a target selection: a column appearing in a result set (usually configured for constructing a result set, late materialization, and the like).

FIG. 11B is a schematic diagram of parsing a query statement to obtain a parse tree according to an embodiment of this application. The table T1 in FIG. 11B is used as an example. T1.C1 appears in a local predicate T1.C1 = 10 and is marked as a local predicate column. T1.C2 appears in a join predicate T1.C2 = T2.C2 and is marked as a join predicate column. T1.C3 and T1.C4 appear in a target selection statement and are marked as target selection columns.

Illustratively, a query statement is as follows:

    SELECT T1.C3, T2.C2

    FROM T1, T2

    WHERE T1.C1=1
    AND T1.C2 = T2.C2.

Two tables T1 and T2 are involved in the query statement, where T1.C1 = 1 is a local predicate. Therefore, T1.C1 is a column used by the local predicate. Therefore, T1.C1 is added to a local predicate column combination. T1.C2 = T2.C2 is a join predicate, and T1.C2 and T2.C2 are columns used by the join predicate. Therefore, T1.C2 and T2.C2 are added to a join predicate column combination. T1.C3 appears in a SELECT list and is a target selection column. Therefore, T1.C3 is added to a target selection column combination.

When a column appears in both the local predicate and the join predicate, the column is added to the local predicate column combination. When a column appears in both the local predicate and the target selection statement, the column is added to the local predicate column combination. When a column appears in both the join predicate and the target selection statement, the column is added to the join predicate column.

Illustratively, the query statement is as follows:

    SELECT T1.C1, T2.C4

    FROM T1, T2

    WHERE T1.C1=1

        AND T1.C1 = T2.C1

        AND T1.C2 = T2.C2

        AND T1.C3 = T2.C3.

For T1, T1.C1 appears in the local predicate. Although T1.C1 also appears in the join predicate and the target selection statement, T1.C1 is no longer recorded in the column corresponding to the join predicate and the column of the target selection. During query execution, T1.C1 is accessed in a column combination corresponding to the local predicate for the first time. When a result set is generated, T1.C1 has been accessed and does not need to be re-accessed subsequently. Therefore, a column combination corresponding to the local predicate of T1 is {T1.C1}, and a column combination corresponding to the join predicate is {T1.C2, T1.C3}.

For T2, there is no column appearing in the local predicate, T2.C1, T2.C2, and T2.C3 all appear in the join predicate, and T2.C4 appears in the target selection statement. Therefore, a column combination corresponding to the join predicate of T2 is {T2.C1, T2.C2, T2.C3}, and a column combination corresponding to the target selection is {T2.C4}.

Operation 1103: Rewrite the query.

In this operation, some rewrites are performed on the parse tree, such as eliminating a sub-query and merging a view, to improve the query efficiency. Then, a modified parse tree is obtained.

Operation 1104: Calculate an access path.

In this operation, when the access path is calculated using a database optimizer, an optimal path is calculated according to storage information of column combinations, and minimum query overheads corresponding to the column combinations are recorded.

Operation 1105: Generate a plan.

In this operation, a data structure describing detailed operations of how to execute the query statement is generated, to provide important information and guidance for subsequent query execution.

Operation 1106: Execute the query.

During query execution, execution information is recorded, and it is checked whether the column combination used is valid. A comparison between overheads of a previously used combination manner and overheads after combination is recorded, to check whether there is any improvement.

Operation 2: Determine candidate column combinations of the tables when a minimum query overhead is achieved during the execution of the query statements.

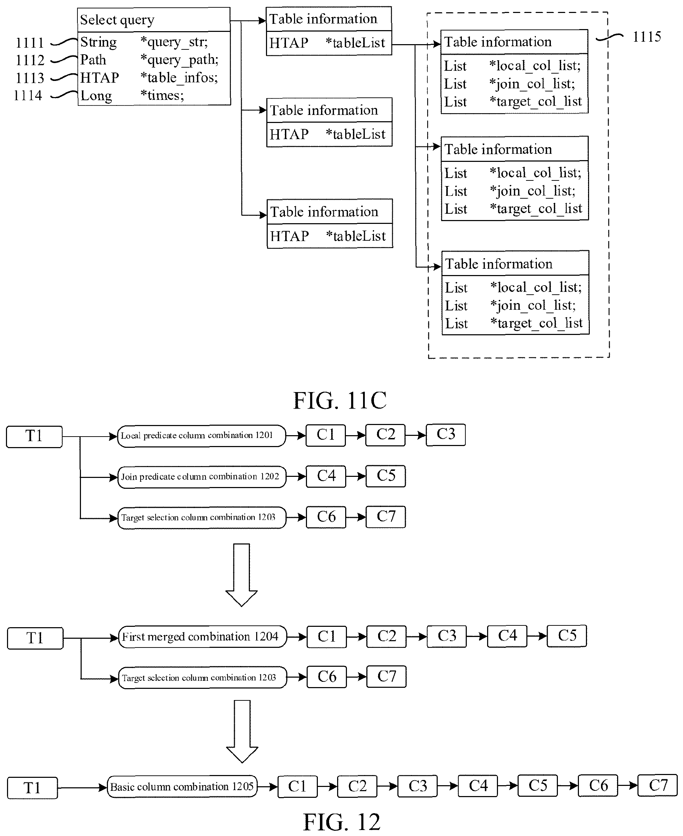

In some embodiments, after a plurality of query statements is received, a query record may be generated based on the plurality of query statements. FIG. 11C is a schematic diagram of a storage format of a query record. As shown in FIG. 11C, each query record includes a query statement 1111, an access path 1112, table information 1113, the number of execution times 1114 of the query statement, and column information 1115 of columns included in the table.

In some embodiments, to determine candidate column combinations of the tables appearing in the query statement, basic column combinations of the tables need to be first determined. FIG. 12 is a schematic diagram of determining a basic column combination of T1. As shown in FIG. 12, assuming that in operation 1, it is determined that a local predicate column combination 1201 of T1 is {C1, C2, C3}, a join predicate column combination 1202 of T1 is {C4, C5}, and a target selection column combination 1203 of T1 is {C6, C7}, if there is no case in which local predicate columns of T1 need to be separately processed, such as local materialization, the local predicate column combination and the join predicate column combination are merged to obtain a first merged combination 1204 {C1, C2, C3, C4, C5}. If there is no case in which the target columns of T1 need to be separately processed, such as late materialization, the target selection column combination 1203 and the first merged combination 1204 are merged to obtain a basic column combination 1205 {C1, C2, C3, C4, C5, C6, C7} of T1.

In some embodiments, if there is a case in which the local predicate columns of T1 need to be separately processed, such as local materialization, a column combination corresponding to the local predicate and a column combination corresponding to the join predicate cannot be merged. In this case, if there is no case in which the target columns of T1 need to be separately processed, such as late materialization, the column combination corresponding to the join predicate and the target selection column combination may be merged to obtain a second merged combination {C4, C5, C6, C7}. Thus, there are two basic column combinations of T1, i.e., {C1, C2, C3} and {C4, C5, C6, C7}. If there is a case in which the local predicate columns of T1 need to be separately processed, such as local materialization, and the target columns of T1 need to be separately processed, such as late materialization, no merging is performed. That is, there are three basic column combinations of T1, i.e., {C1, C2, C3}, {C4, C5}, and {C6, C7}.

After the basic column combinations of the tables appearing in the query statement are determined, query overheads for executing the query statement according to different access paths when the tables are merged and stored according to the basic column combinations are determined, and a query overhead corresponding to an optimal path is determined as a basic overhead for executing the query statement (corresponding to the first reference overhead in other embodiments). Then, the basic column combinations of the tables are merged to obtain at least one merged basic column combination. Query overheads for executing the query statement according to different access paths when the tables are stored according to the merged basic column combination are determined, and a query overhead corresponding to an optimal path is determined as a query overhead corresponding to the merged basic column combination. After query overheads corresponding to the merged basic column combinations of the tables are determined, if a minimum query overhead is less than the basic overhead corresponding to the basic column combinations, better query efficiency can be achieved after the basic column combinations are merged. In this case, the merged basic column combination corresponding to the minimum query overhead is determined as the candidate column combination of the table. If the minimum query overhead is greater than or equal to the basic overhead corresponding to the basic column combinations, better query efficiency cannot be achieved after the basic column combinations are merged. In this case, the basic column combination is determined as the candidate column combination of the table.

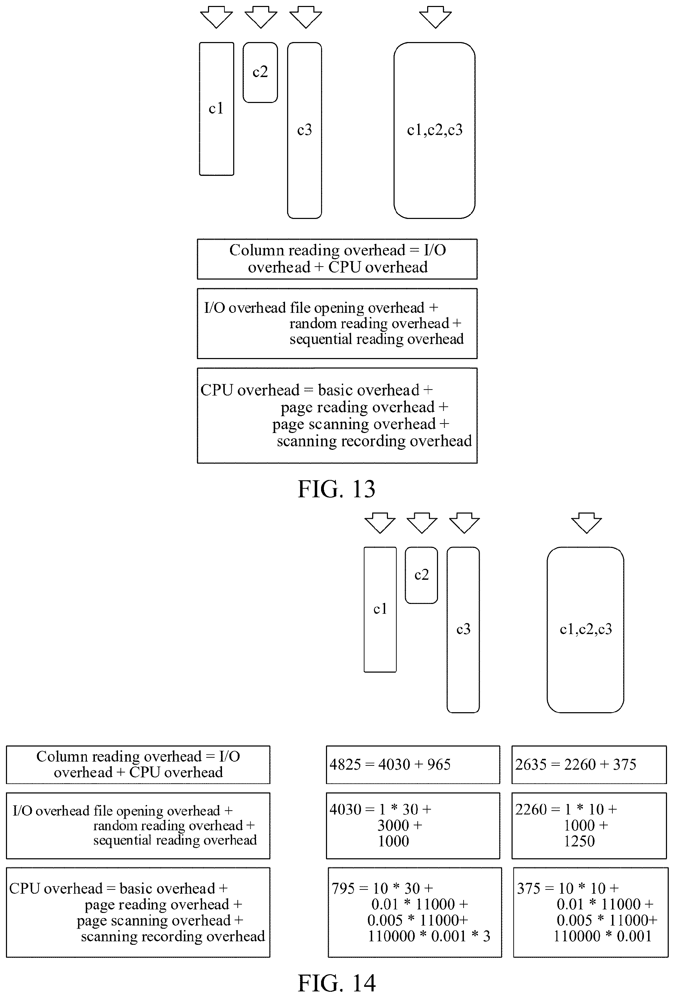

In the embodiments of this application, the query overhead is a column reading overhead. As shown in FIG. 13, the column reading overhead may include an I/O overhead and a CPU overhead. The I/O overhead may be a sum of a file opening overhead, a random reading overhead, and a sequential reading overhead. The CPU overhead may be a sum of a basic overhead, a page reading overhead, a page scanning overhead, and a scanning recording overhead.

FIG. 14 is a schematic diagram of determining a column reading overhead during separate storage and merged storage of three columns. As shown in FIG. 14, when C1, C2, and C3 are stored in three different files, three files need to be opened when C1, C2, and C3 are read. Assuming that an overhead for opening one file is 10 milliseconds (ms), an overhead for opening three files is 30 ms. An overhead for randomly reading one file is 1,000 ms, and thus, an overhead for randomly reading three files is 3,000 ms. Since reading a large file is more likely to trigger sequential reading than reading a small file, a sequential reading overhead (1,000 ms) for reading three small files is less than a sequential reading overhead (1,250 ms) for reading one large file.

Therefore, if C1, C2, and C3 are stored in three different files, the I/O overhead is 30+3,000+1,000=4,030 ms. If C1, C2, and C3 are stored in the same file, the I/O overhead is 10+1,000+1,250=2,260 ms.

In the CPU overhead, the fewer files are opened, the smaller the basic overhead will be. Assuming that a file size is unchanged during separate storage and merged storage, the page reading overhead and the page scanning overhead are consistent. For the scanning recording overhead, a combined overhead for parsing the number of columns of records is one third of a total overhead of a single column.

Therefore, when C1, C2, and C3 are stored in three different files, the CPU overhead is 300+110+55+330=795 ms. When C1, C2, and C3 are stored in the same file, the CPU overhead is 100+110+55+110=375 ms.

Then, C1, C2, and C3 are stored in three different files, and the query overhead is 4,030+795=4,825 ms. C1, C2, and C3 are stored in the same file, and the query overhead is 2,260+375=2,365 ms.

Operation 3: Combine a plurality of candidate column combinations determined for the tables through different query statements again, to determine optimal column combinations for the tables when a minimum total query overhead is achieved during the execution of a plurality of query statements.

For an application, a plurality of different query statements may be acquired, and candidate column combinations corresponding to the same table in different query statements may be different. Therefore, the same table corresponds to multiple different candidate column combinations. In this operation, to achieve a minimum total query overhead in an application dimension, multiple different column combinations corresponding to the same table are merged. Generally, columns of the table are associated, and a merged column combination scale is relatively controllable.

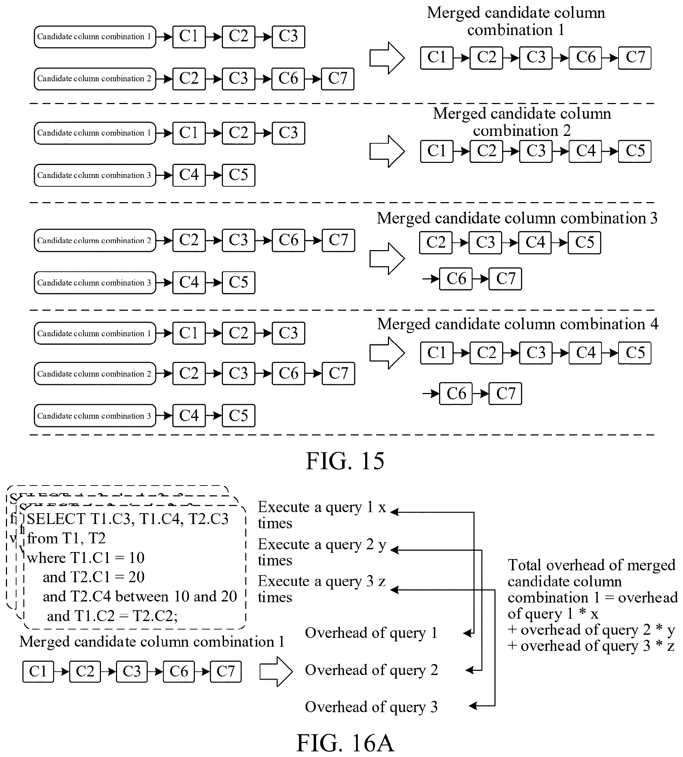

FIG. 15 is a schematic diagram of merging three candidate column combinations of T1. As shown in FIG. 15, T1 has three candidate column combinations, i.e., {C1, C2, C3}, {C2, C3, C6, C7}, and {C4, C5}. At least two of the three candidate column combinations are merged to obtain four merged candidate column combinations: a merged candidate column combination 1 {C1, C2, C3, C6, C7}, a merged candidate column combination 2 {C2, C3, C6, C7, C4, C5}, a merged candidate column combination 3 {C1, C2, C3, C4, C5}, and a merged candidate column combination 4 {C1, C2, C3, C4, C5, C6, C7}.

For other tables appearing in the query statement, the candidate column combinations are merged according to the foregoing manner to obtain a plurality of merged candidate column combinations. Then, query overheads for executing the query statements are determined based on the merged candidate column combinations of the table, and a total query overhead for executing a plurality of query statements is determined based on the number of execution times of the query statements.

FIG. 16A is a schematic diagram of determining a total query overhead for storing table data according to a merged candidate column combination and executing a plurality of query statements according to an embodiment of this application. As shown in FIG. 16A, in a case that the table data is stored according to a merged candidate column combination, query overheads for executing the query statements are determined, and then, a total query overhead corresponding to the merged candidate column combination is determined based on the number of execution times of the query statements and the query overheads corresponding to the query statements.

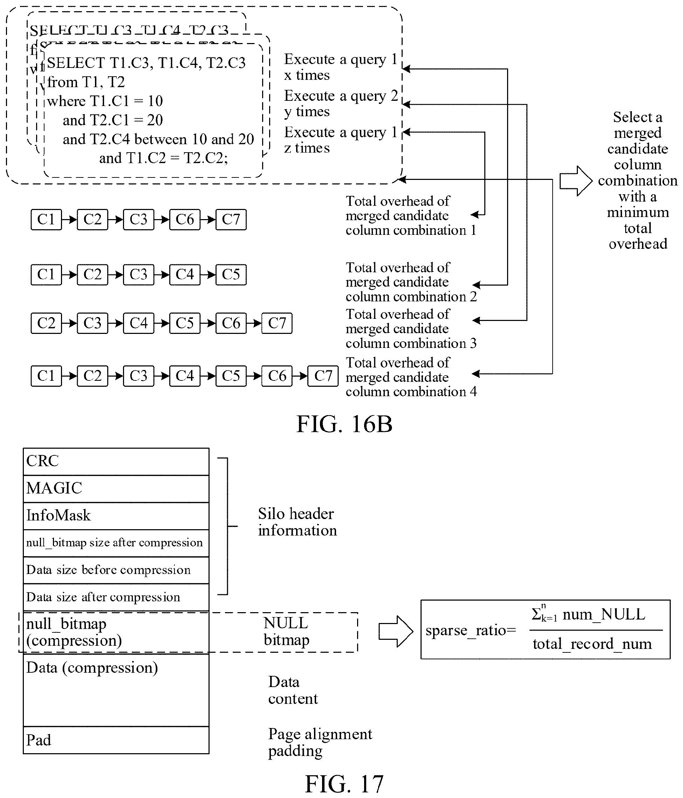

FIG. 16B is a schematic diagram of determining a column combination with a minimum total overhead according to an embodiment of this application. As shown in FIG. 16B, total overheads of the combinations are determined, and the column combination with the minimum total overhead is used as an optimal column combination of a table.

Operation 4: Perform optimized storage based on optimal column combinations of the tables.

In the embodiments of this application, one table may correspond to one or more optimal column combinations. Illustratively, there may be two optimal column combinations of T1, i.e., {C1, C2, C3} and {C4, C5, C6, C7}. That is, C1, C2, and C3 are stored in one file, and C4, C5, C6, and C7 are stored in one file so that an optimal query effect may be achieved. Therefore, after the optimal column combinations of the tables are obtained, if a table has only one optimal column combination, data storage is directly performed based on the optimal column combination. If a table corresponds to two or more optimal column combinations, before storage optimization is performed, sparsity determination is first performed on the optimal column combinations of the table to determine whether there is a sparse optimal column combination.

When sparsity determination is performed on the optimal column combinations of the table, it is determined whether columns in the optimal column combinations are sparse columns. FIG. 17 is a schematic diagram of determining a sparse column according to an embodiment of this application. As shown in FIG. 17, if a ratio of the number of NULL in column data of a column to a total number of records of the column is greater than a preset threshold, the column is a sparse column. If in an optimal column combination, all columns are sparse columns, it is determined that the optimal column combination is a sparse optimal column combination.

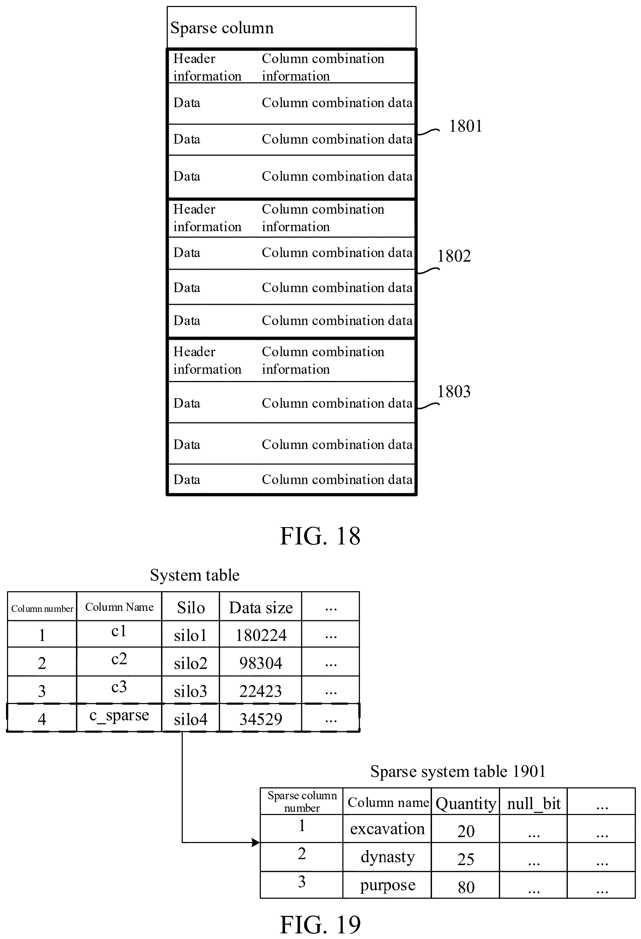

Since a file configured to store the sparse optimal column combination contains a relatively small data volume, a large number of small files are easily generated, thereby affecting the storage and reading efficiency. In this embodiment of this application, when one table corresponds to two sparse optimal column combinations, a file configured to store column data is processed into blocks to obtain a plurality of file blocks, and each file block stores a sparse optimal column combination, thereby achieving block storage of the sparse column combinations. FIG. 18 is a schematic diagram of block storage of sparse optimal column combinations according to an embodiment of this application. As shown in FIG. 18, in a storage file, there are three file blocks, i.e., a file block 1801, a file block 1802, and a file block 1803. The three file blocks each store column data corresponding to a sparse optimal column combination.

If at least two sparse optimal column combinations do not exist in a table, optimized storage is performed based on the optimal column combination of the table.

Information of sparse columns in the sparse optimal column combination, for example, including column identifiers of the sparse columns, is stored in header information of the sparse optimal column combination. When column data of a column is read, reading is started from a corresponding file offset according to metadata information. In addition, if column data of sparse columns stored in a file increases to the extent that column data cannot be stored in the file completely, column data that no longer belongs to the optimal column combination in which the sparse columns are located may be removed from the file and stored into a new file. Storage optimization may be performed again to redivide a storage column combination and modify the metadata information.

FIG. 19 is a schematic diagram of a system table according to an embodiment of this application. The system table is configured to mark a correspondence between a file (silo) configured to store column data and a column. A sparse system table 1901 needs to be added to store metadata of sparse columns and related information of the sparse columns, including a column name, the number of occurrence times, a null bitmap, and the like.

Before storage optimization is performed based on an optimal column combination of the table, an optimization time is first determined based on historical data of an application. In some embodiments, a time period in which data is queried and updated infrequently may be determined through the historical data of the application, and storage optimization is performed in this time period. When storage optimization is performed, metadata information of a to-be-optimized table is first determined.

The metadata information includes column identifiers included in an optimal column combination, and a format and a location of a storage file of the optimal column combination. Then, transformation is performed according to an optimal column combination manner of the table, that is, column data corresponding to the column identifiers in the optimal column combination is stored into the file corresponding to the optimal column combination. In addition, during storage optimization, data transformation is performed piecewise, and corresponding metadata information is updated. That is, column data of a to-be-optimized table is converted each time, and after column data corresponding to an optimal column combination in the to-be-optimized table is stored into a corresponding file, metadata information corresponding to column identifiers included in the optimal column combination in the system table is updated so that after a query statement is received, data is queried using a new storage format and storage file.

In some embodiments, if data update information is received in a storage optimization process, the data update information is recorded into corresponding log information. After the storage optimization is completed, data is changed according to the recorded log information.

After column storage data of a database is optimized using the data storage method provided in the embodiments of this application, when query execution is reduced according to a combined column reading manner, the number of read files is reduced, and continuous reading is performed, thereby improving the data access efficiency. In addition, the number of small files in sparse columns can be reduced, thereby improving the file management efficiency and reducing the impact of fragmented files.

In the embodiments of this application, relevant data such as user information, query requests, and table data are involved. When the embodiments of this application are applied to specific products or technologies, user permission or consent needs to be required, and the acquisition, use, and processing of relevant data need to comply with relevant laws, regulations, and standards of relevant countries and regions.

The following continues to describe an exemplary structure in which a data storage apparatus 455 provided in the embodiments of this application is implemented as software modules. In some embodiments, as shown in FIG. 3, the software modules stored in the data storage apparatus 455 of the memory 450 may include: a first acquisition module 4551 configured to acquire a plurality of query requests for an application, and parse the query requests to obtain at least one piece of column information included in the query requests; a first determining module 4552 configured to determine, based on the at least one piece of column information included in the query requests, candidate column combinations of one or more tables related to each of the query requests, where a query overhead for executing the query request is minimum if table data of the one or more tables related to the query request is stored according to the candidate column combinations corresponding to the query request; a second determining module 4553 configured to determine, based on a plurality of candidate column combinations belonging to one of tables related to the plurality of query requests, respective target column combinations of the tables, where a total query overhead for executing the plurality of query requests is minimum if the table data of the tables is stored according to respective target column combinations; and a data storage module 4554 configured to store the table data of the tables according to the respective target column combinations.

In some embodiments, the column information includes column identifiers and column attribute information, and the first acquisition module 4551 is further configured to: parse the query requests to obtain at least one query statement; determine at least one column identifier corresponding to query statements; and determine column attribute information corresponding to column identifiers, the column attribute information including one of a local predicate column attribute, a join predicate column attribute, and a target selection column attribute.

In some embodiments, the first determining module 4552 is further configured to: determine, based on column attribute information corresponding to column identifiers in an $i^{th}$ query request, basic column combination sets of tables related to the $i^{th}$ query request, where the basic column combination set includes at least one basic column combination, i = 1, ..., M, and M is a total number of query requests; and determine, when a basic column combination set of a $j^{th}$ table related to the $i^{th}$ query request includes one basic column combination, the basic column combination as a candidate column combination of the $j^{th}$ table, where j = 1, ..., N, and N is a total number of tables related to the $i^{th}$ query request.

In some embodiments, the first determining module 4552 is further configured to: merge, when N is 1 and the basic column combination set of the $j^{th}$ table includes at least two basic column combinations, the at least two basic column combinations of the $j^{th}$ table to obtain at least one merged basic column combination of the $j^{th}$ table; determine, in a case that table data of the $j^{th}$ table is stored according to the at least two basic column combinations, a first reference overhead for executing the $i^{th}$ query request; determine, in a case that the table data of the $j^{th}$ table is stored according to merged basic column combinations, first query overheads for executing the $i^{th}$ query request; determine a first minimum query overhead among the first query overheads; determine, when the first minimum query overhead is less than or equal to the first reference overhead, a merged basic column combination corresponding to the first minimum query overhead as the candidate column combination of the $j^{th}$ table; and determine, when the first minimum query overhead is greater than the first reference overhead, the at least two basic column combinations as candidate column combinations of the $j^{th}$ table.

In some embodiments, the first determining module 4552 is further configured to: merge, when N is greater than 1 and the basic column combination set of the $j^{th}$ table includes the at least two basic column combinations, the at least two basic column combinations of the $j^{th}$ table to obtain at least one merged basic column combination of the $j^{th}$ table; merge, when another table including at least two basic column combinations exists in N tables, the at least two basic column combinations of the another table to obtain at least one merged basic column combination of the another table; determine, in a case that table data of the N tables is stored according to corresponding basic column combinations, a second reference overhead for executing the $i^{th}$ query request; determine, in a case that table data of tables each including at least two basic column combinations in the N tables is stored according to corresponding merged basic column combinations, and table data of tables each including one basic column combination is stored according to basic column combinations, second query overheads for executing the $i^{th}$ query request; determine a second minimum query overhead among the second query overheads; determine, when the second minimum query overhead is less than or equal to the second reference overhead, column combinations of tables corresponding to the second minimum query overhead as the candidate column combinations of the tables; and determine, when the second minimum query overhead is greater than the second reference overhead, basic column combinations of the tables as the candidate column combinations of the tables.

In some embodiments, the first determining module 4552 is further configured to: determine, in a case that the table data of the $j^{th}$ table is stored according to a $k^{th}$ merged basic column combination, path overheads for executing the $i^{th}$ query request according to different access paths, where k = 1, ..., P, and P is a total number of merged basic column combinations of the $j^{th}$ table; and determine a minimum path overhead in the path overheads corresponding to the $k^{th}$ merged basic column combination as the first query overhead for executing the $i^{th}$ query request when the table data of the $j^{th}$ table is stored according to the $k^{th}$ merged basic column combination.

In some embodiments, the first determining module 4552 is further configured to: add a column identifier of a column whose column attribute information is the local predicate column attribute in the $j^{th}$ table to a local predicate column combination corresponding to the $j^{th}$ table; add a column identifier of a column whose column attribute information is the join predicate column attribute in the $j^{th}$ table to a join predicate column combination corresponding to the $j^{th}$ table; add a column identifier of a column whose column attribute information is the target selection column attribute in the $j^{th}$ table to a target selection column combination corresponding to the j$^{th}$ table; merge, when the local predicate column combination and the join predicate column combination satisfy a first merging condition, the local predicate column combination and the join predicate column combination to obtain a first merged combination; merge, when the first merged combination and the target selection column combination satisfy a second merging condition, the first merged combination and the target selection column combination to obtain a basic column combination of the jth table; and add the basic column combination of the j$^{th}$ table to the basic column combination set of the j$^{th}$ table.

In some embodiments, the first determining module 4552 is further configured to: determine, when the first merged combination and the target selection column combination do not satisfy the second merging condition, the first merged combination and the target selection column combination as basic column combinations of the j$^{th}$ table; and add the basic column combinations of the j$^{th}$ table to the basic column combination set of the j$^{th}$ table.

In some embodiments, the first determining module 4552 is further configured to: merge, when the local predicate column combination and the join predicate column combination do not satisfy the first merging condition, and the join predicate column combination and the target selection column combination satisfy the second merging condition, the join predicate column combination and the target selection column combination to obtain a second merged combination; determine the local predicate column combination and the second merged combination as basic column combinations of the j$^{th}$ table; and add the basic column combinations of the j$^{th}$ table to the basic column combination set of the j$^{th}$ table.

In some embodiments, the first determining module 4552 is further configured to: determine, when the local predicate column combination and the join predicate column combination do not satisfy the first merging condition, and the join predicate column combination and the target selection column combination do not satisfy the second merging condition, the local predicate column combination, the join predicate column combination, and the target selection column combination as basic column combinations of the j$^{th}$ table; and add the basic column combinations of the j$^{th}$ table to the basic column combination set of the j$^{th}$ table.

In some embodiments, the second determining module 4553 is further configured to: merge at least two candidate column combinations belonging to the same table to obtain at least one merged candidate column combination of the corresponding tables; determine, in a case that the table data of the tables is stored according to corresponding merged candidate column combinations, total query overheads for executing the plurality of query requests; determine, in a case that the table data of the tables is stored according to corresponding candidate column combinations, a total reference overhead for executing the plurality of query requests; determine a minimum total query overhead among the total query overheads; and determine, when the minimum total query overhead is less than or equal to the total reference overhead, merged candidate column combinations of tables corresponding to the minimum total query overhead as the target column combinations of the tables.

In some embodiments, the second determining module 4553 is further configured to: determine, in a case that the table data of the tables is stored according to the corresponding merged candidate column combinations, third query overheads for executing the query requests; acquire the number of execution times of the query requests; and determine, based on the number of execution times of the query requests and the third query overheads corresponding to the query requests, the total query overheads for executing the plurality of query requests.

In some embodiments, the data storage module 4554 is further configured to: merge, when there are at least two sparse target column combinations in target column combinations of an s$^{th}$ table, the at least two sparse target column combinations to obtain at least one merged sparse target column combination, where s = 1, 2, ..., Q, and Q is a total number of tables that need to be optimized; determine new metadata information corresponding to sparse target column identifiers in the at least one merged sparse target column combination, the new metadata information including a file identifier, a file format, and a storage location of a storage file corresponding to column data; store column data corresponding to the sparse target column identifiers into a corresponding storage file based on metadata information corresponding to the sparse target column identifiers; update the metadata information corresponding to the sparse target column identifiers in a system table to the new metadata information corresponding to the sparse target column identifiers; determine, when the s$^{th}$ table further includes another target column combination except the at least two sparse target column combinations, new metadata information corresponding to other target column identifiers in the another target column combination; store column data corresponding to the other target column identifiers into the corresponding storage file based on the new metadata information corresponding to the other target column identifiers in the another target column combination; and update metadata information corresponding to the other target column identifiers in the system table to the new metadata information corresponding to the other target column identifiers.

In some embodiments, the data storage module 4554 is further configured to: determine, when the target column combinations of the s$^{th}$ table do not include the at least two sparse target column combinations, new metadata information corresponding to target column identifiers in the target column combinations; store column data corresponding to the target column identifiers into the corresponding storage file based on metadata information corresponding to the target column identifiers; and update the metadata information corresponding to the target column identifiers in the system table to the new metadata information corresponding to the target column identifiers.

In some embodiments, the apparatus further includes: a second acquisition module configured to acquire column identifiers in the target column combination, and acquire the number of pieces of null data and the number of pieces of total data in column data corresponding to the column identifiers; a third determining module configured to determine ratios of the number of pieces of null data to the number of pieces of total data corresponding to the column identifiers as sparsity values corresponding to the column identifiers; a fourth determining module configured to determine a column corresponding to a column identifier whose sparsity value is greater than a sparsity threshold as a sparse column; and a fifth determining module configured to determine, when columns corresponding to the column identifiers in the target column combination are sparse columns, the target column combination as the sparse target column combination.

In some embodiments, the apparatus further includes: an information storage module configured to store, when data update information is received in a data storage process, the data update information into an update log; a data update module configured to update, after data storage is completed, the table data based on the data update information in the update log to obtain updated table data; and an information deletion module configured to delete the data update information from the update log.

The embodiments of this application provide a computer program product. The computer program product includes a computer program or a computer-executable instructions. The computer program or the computer-executable instruction is stored in a computer-readable storage medium. A processor of an electronic device reads the computer-executable instruction from the computer-readable storage medium and executes the computer-executable instruction to cause the electronic device to perform the data storage method provided in the embodiments of this application.

The embodiments of this application provide a computer-readable storage medium, having a computer-executable instruction stored therein. The computer-readable storage medium has a computer-executable instruction or a computer program stored therein. When the computer-executable instruction or the computer program is executed by a processor, the processor is enabled to perform the data storage method provided in the embodiments of this application, for example, the data storage method shown in FIG. 4 and FIG. 10.

In some embodiments, the computer-readable storage medium may be a memory such as a RAM, a ROM, a flash memory, a magnetic surface memory, a CD, or a CD-ROM. The computer-readable storage medium may alternatively be a device including one or any combination of the foregoing memories.

In some embodiments, the computer-executable instruction may be written in the form of a program, software, software module, script, or code in any form of programming language (including compilation or interpretation language, or declarative or procedural language), and may be deployed in any form, including being deployed as an independent program or being deployed as a module, assembly, subroutine, or another unit suitable for use in a computing environment.

As an example, the computer-executable instruction may but may not necessarily correspond to a file in a file system, may be stored in a part of the file for storing other programs or data, for example, stored in one or more scripts in a hyper text markup language (HTML) document, stored in a single file specially used for the discussed program, or stored in a plurality of collaborative files (for example, files storing one or more modules, a subprogram, or a code part).

As an example, the computer-executable instruction may be deployed to be executed on one electronic device, on a plurality of electronic devices located at one location, or on a plurality of electronic devices distributed at a plurality of locations and interconnected through a communication network.

The foregoing descriptions are merely embodiments of this application and are not intended to limit the protection scope of this application. Any modification, equivalent replacement, or improvement made within the spirit and scope of this application falls within the protection scope of this application.

## Claims

1. A data storage method, applied to an electronic device, **characterized by** comprising:

    acquiring a plurality of query requests for an application, and parsing the query requests to obtain at least one piece of column information comprised in each query request or in the query requests;
    determining, based on the at least one piece of column information comprised in each query request or in the query requests, candidate column combinations of one or more tables related to each of the query requests, wherein a query overhead for executing the query request is minimum if table data of the one or more tables related to the query request is stored according to the candidate column combinations corresponding to the query request;
    determining, based on a plurality of candidate column combinations belonging to one of tables related to the plurality of query requests, respective target column combinations of the tables;

and

 storing the table data of the tables according to the respective target column combinations such that a total query overhead for executing the plurality of query requests is minimum.

2. The method according to claim 1, wherein the column information comprises column identifiers and column attribute information, and the parsing the query requests to obtain at least one piece of column information comprised in each query request or in the query requests comprises:

 parsing the query requests to obtain at least one query statement;
 determining at least one column identifier corresponding to query statements; and
 determining column attribute information corresponding to column identifiers, the column attribute information comprising one of a local predicate column attribute, a join predicate column attribute, and a target selection column attribute.

3. The method according to claim 1 or 2, wherein the determining, based on the at least one piece of column information comprised in each query request or in the query requests, candidate column combinations of one or more tables related to each of the query requests comprises:

 determining, based on column attribute information corresponding to column identifiers in an $i^{th}$ query request, basic column combination sets of tables related to the $i^{th}$ query request, wherein the basic column combination set comprises at least one basic column combination, $i = 1, ..., M$, and M is a total number of query requests; and
 determining, when a basic column combination set of a $j^{th}$ table related to the $i^{th}$ query request comprises one basic column combination, the basic column combination as a candidate column combination of the $j^{th}$ table, wherein $j = 1, ..., N$, and N is a total number of tables related to the $i^{th}$ query request.

4. The method according to any one of claims 1 to 3, wherein the determining, based on the at least one piece of column information comprised in each query request or in the query requests, candidate column combinations of one or more tables related to each of the query requests comprises:

 merging, when N is 1 and the basic column combination set of the $j^{th}$ table comprises at least two basic column combinations, the at least two basic column combinations of the $j^{th}$ table to obtain at least one merged basic column combination of the $j^{th}$ table;

 determining, in a case that table data of the $j^{th}$ table is stored according to the at least two basic column combinations, a first reference overhead for executing the $i^{th}$ query request;
 determining, in a case that the table data of the $j^{th}$ table is stored according to merged basic column combinations, first query overheads for executing the $i^{th}$ query request;
 determining a first minimum query overhead among the first query overheads;
 determining, when the first minimum query overhead is less than or equal to the first reference overhead, a merged basic column combination corresponding to the first minimum query overhead as the candidate column combination of the $j^{th}$ table; and
 determining, when the first minimum query overhead is greater than the first reference overhead, the at least two basic column combinations as candidate column combinations of the $j^{th}$ table.

5. The method according to any one of claims 1 to 4, wherein the determining, based on the at least one piece of column information comprised in each query request or in the query requests, candidate column combinations of one or more tables related to each of the query requests comprises:

 merging, when N is greater than 1 and the basic column combination set of the $j^{th}$ table comprises the at least two basic column combinations, the at least two basic column combinations of the $j^{th}$ table to obtain at least one merged basic column combination of the $j^{th}$ table;
 merging, when another table comprising at least two basic column combinations exists in N tables, the at least two basic column combinations of the another table to obtain at least one merged basic column combination of the another table;
 determining, in a case that table data of the N tables is stored according to corresponding basic column combinations, a second reference overhead for executing the $i^{th}$ query request;
 determining, in a case that table data of tables each comprising at least two basic column combinations in the N tables is stored according to corresponding merged basic column combinations, and table data of tables each comprising one basic column combination is stored according to basic column combinations, second query overheads for executing the $i^{th}$ query request;
 determining a second minimum query overhead among the second query overheads;
 determining, when the second minimum query overhead is less than or equal to the second reference overhead, column combinations of tables corresponding to the second minimum query overhead as the candidate column combinations of the tables; and

determining, when the second minimum query overhead is greater than the second reference overhead, basic column combinations of the tables as the candidate column combinations of the tables.

6. The method according to any one of claims 1 to 5, wherein the determining, in a case that the table data of the $j^{th}$ table is stored according to merged basic column combinations, first query overheads for executing the $i^{th}$ query request comprises:

determining, in a case that the table data of the $j^{th}$ table is stored according to a $k^{th}$ merged basic column combination, corresponding path overheads for executing the $i^{th}$ query request according to a plurality of different access paths, wherein k = 1, ..., P, and P is a total number of merged basic column combinations of the $j^{th}$ table; and determining a minimum path overhead in the path overheads corresponding to the $k^{th}$ merged basic column combination as the first query overhead for executing the $i^{th}$ query request when the table data of the $j^{th}$ table is stored according to the $k^{th}$ merged basic column combination.

7. The method according to any one of claims 1 to 6, wherein the determining, based on column attribute information corresponding to column identifiers in an $i^{th}$ query request, basic column combination sets of tables related to the $i^{th}$ query request comprises:

adding a column identifier of a column whose column attribute information is the local predicate column attribute in the $j^{th}$ table to a local predicate column combination corresponding to the $j^{th}$ table; adding a column identifier of a column whose column attribute information is the join predicate column attribute in the $j^{th}$ table to a join predicate column combination corresponding to the $j^{th}$ table; adding a column identifier of a column whose column attribute information is the target selection column attribute in the $j^{th}$ table to a target selection column combination corresponding to the $j^{th}$ table; merging, when the local predicate column combination and the join predicate column combination satisfy a first merging condition, the local predicate column combination and the join predicate column combination to obtain a first merged combination; merging, when the first merged combination and the target selection column combination satisfy a second merging condition, the first merged combination and the target selection column combination to obtain a basic column combination of the $j^{th}$ table; and adding the basic column combination of the $j^{th}$ table to the basic column combination set of the $j^{th}$ table.

8. The method according to any one of claims 1 to 7, wherein the determining, based on column attribute information corresponding to column identifiers in an $i^{th}$ query request, basic column combination sets of tables related to the $i^{th}$ query request comprises:

determining, when the first merged combination and the target selection column combination do not satisfy the second merging condition, the first merged combination and the target selection column combination as basic column combinations of the $j^{th}$ table; and adding the basic column combinations of the $j^{th}$ table to the basic column combination set of the $j^{th}$ table.

9. The method according to any one of claims 1 to 8, wherein the determining, based on column attribute information corresponding to column identifiers in an $i^{th}$ query request, basic column combination sets of tables related to the $i^{th}$ query request comprises:

merging, when the local predicate column combination and the join predicate column combination do not satisfy the first merging condition, and the join predicate column combination and the target selection column combination satisfy the second merging condition, the join predicate column combination and the target selection column combination to obtain a second merged combination; determining the local predicate column combination and the second merged combination as basic column combinations of the $j^{th}$ table; and adding the basic column combinations of the $j^{th}$ table to the basic column combination set of the $j^{th}$ table.

10. The method according to any one of claims 1 to 9, wherein the determining, based on column attribute information corresponding to column identifiers in an $i^{th}$ query request, basic column combination sets of tables related to the $i^{th}$ query request comprises:

determining, when the local predicate column combination and the join predicate column combination do not satisfy the first merging condition, and the join predicate column combination and the target selection column combination do not satisfy the second merging condition, the local predicate column combination, the join predicate column combination, and the target selection column combination as basic column combinations of the $j^{th}$ table; and

adding the basic column combinations of the $j^{th}$ table to the basic column combination set of the $j^{th}$ table.

11. The method according to any one of claims 1 to 10, wherein the determining, based on a plurality of candidate column combinations belonging to one of tables related to the plurality of query requests, respective target column combinations of the tables comprises:

merging at least two candidate column combinations belonging to the same table to obtain at least one merged candidate column combination of the corresponding tables;

determining, in a case that the table data of the tables is stored according to corresponding merged candidate column combinations, total query overheads for executing the plurality of query requests;

determining, in a case that the table data of the tables is stored according to corresponding candidate column combinations, a total reference overhead for executing the plurality of query requests;

determining a minimum total query overhead among the total query overheads; and

determining, when the minimum total query overhead is less than or equal to the total reference overhead, merged candidate column combinations of tables corresponding to the minimum total query overhead as the target column combinations of the tables.

12. The method according to any one of claims 1 to 11, wherein the determining, in a case that the table data of the tables is stored according to corresponding merged candidate column combinations, total query overheads for executing the plurality of query requests comprises:

determining, in a case that the table data of the tables is stored according to the corresponding merged candidate column combinations, third query overheads for executing the query requests;

acquiring the number of execution times of the query requests; and

determining, based on the number of execution times of the query requests and the third query overheads corresponding to the query requests, the total query overheads for executing the plurality of query requests.

13. The method according to any one of claims 1 to 13, wherein the storing the table data of the tables according to the respective target column combinations comprises:

merging, when there are at least two sparse target column combinations in target column combinations of a $s^{th}$ table, the at least two sparse target column combinations to obtain at least one merged sparse target column combination, wherein s = 1, 2, ..., Q, and Q is a total number of tables that need to be optimized;

determining new metadata information corresponding to sparse target column identifiers in the at least one merged sparse target column combination, the new metadata information comprising a file identifier, a file format, and a storage location of a storage file corresponding to column data;

storing column data corresponding to the sparse target column identifiers into a corresponding storage file based on metadata information corresponding to the sparse target column identifiers;

updating the metadata information corresponding to the sparse target column identifiers in a system table to the new metadata information corresponding to the sparse target column identifiers;

determining, when the $s^{th}$ table further comprises another target column combination except the at least two sparse target column combinations, new metadata information corresponding to other target column identifiers in the another target column combination;

storing column data corresponding to the other target column identifiers into the corresponding storage file based on the new metadata information corresponding to the other target column identifiers in the another target column combination; and

updating metadata information corresponding to the other target column identifiers in the system table to the new metadata information corresponding to the other target column identifiers.

14. The method according to any one of claims 1 to 13, wherein the storing the table data of the tables according to the respective target column combinations comprises:

determining, when the target column combinations of the $s^{th}$ table do not comprise the at least two sparse target column combinations, new metadata information corresponding to target column identifiers in the target column combinations;

storing column data corresponding to the target column identifiers into the corresponding storage file based on metadata information corresponding to the target column identifiers; and updating the metadata information corresponding to the target column identifiers in the system table to the new metadata information corresponding to the target column identifiers.

15. The method according to any one of claims 1 to 14, wherein the method further comprises:

acquiring column identifiers in the target column combination, and acquiring the number of pieces of null data and the number of pieces of total data in column data corresponding to the column identifiers;

determining ratios of the number of pieces of null data to the number of pieces of total data corresponding to the column identifiers as sparsity values corresponding to the column identifiers;

determining a column corresponding to a column identifier whose sparsity value is greater than a sparsity threshold as a sparse column; and

determining, when columns corresponding to the column identifiers in the target column combination are sparse columns, the target column combination as the sparse target column combination.

16. The method according to any one of claims 1 to 15, wherein the method further comprises:

storing, when data update information is received in a data storage process, the data update information into an update log;

updating, after data storage is completed, the table data based on the data update information in the update log to obtain updated table data; and

deleting the data update information from the update log.

17. A data storage apparatus, comprising:

a first acquisition module configured to acquire a plurality of query requests for an application, and parse the query requests to obtain at least one piece of column information comprised in each query request or in the query requests;

a first determining module configured to determine, based on the at least one piece of column information comprised in each query request or in the query requests, candidate column combinations of one or more tables related to each of the query requests, wherein a query overhead for executing the query requests is minimum if table data of the one or more tables related to the query request is stored according to the candidate column combinations corresponding to the query request;

a second determining module configured to determine, based on a plurality of candidate column combinations belonging to one of tables related to the plurality of query requests, respective target column combinations of the tables; and

a data storage module configured to store the table data of the tables according to the respective target column combinations such that a total query overhead for executing the plurality of query requests is minimum.

18. An electronic device, comprising:

a memory configured to store a computer-executable instruction; and

a processor configured to implement the data storage method according to any one of claims 1 to 16 when executing the computer-executable instruction stored in the memory.

19. A computer-readable storage medium, having a computer-executable instruction or a computer program stored therein, and the computer-executable instruction or the computer program, when executed by a processor, implementing the data storage method according to any one of claims 1 to 16.

20. A computer program product, comprising a computer-executable instruction or a computer program, the computer-executable instruction or the computer program, when executed by a processor, implementing the data storage method according to any one of claims 1 to 16.

| CRC | |
|---|---|
| MAGIC | |
| InfoMask | Silo header information |
| null_bitmap size after compression | |
| Data size before compression | |
| Data size after compression | |
| null_bitmap (compression) | NULL bitmap |
| Data (compression) | Data content |
| Pad | Page alignment padding |

## FIG. 1A

| 0 | 16466 | |
|---|---|---|
| 895M | 16466_1.0 | o_orderkey |
| 1.1G | 16466_2.0 | o_custkey |
| 157M | 16466_2.1 | |
| 144M | 16466_3.0 | o_orderstatus |
| 1.1G | 16466_4.0 | o_totalprice |
| 157M | 16466_4.1 | |
| 609M | 16466_5.0 | o_orderdate |
| 287M | 16466_6.0 | o_orderpriority |
| 1.1G | 16466_7.0 | o_clerk |
| 264M | 16466_7.1 | |
| 0 | 16466_8.0 | o_shippriority |
| 1.1G | 16466_9.0 | o_comment |
| 1.1G | 16466_9.1 | |
| 1.1G | 16466_9.2 | |
| 900M | 16466_9.3 | |
| 9.4G | total | |

## FIG. 1B

Determine a query result corresponding to the query request

Server 400

Database 500

Perform storage optimization on data in the database

Query result

Query request

Network 300

Query request

Query result

Terminal 200

FIG. 2

Server 400

Memory 450

| Operating system 451 |
| Network communication module 452 |
| Presentation module 453 |
| Input processing module 454 |
| Data storage apparatus 455 |

Network interface 420

Processor 410

440

User interface 430

Output apparatus 431

Input apparatus 432

First acquisition module 4551

First determining module 4552

Second determining module 4553

Data storage module 4554

FIG. 3

Acquire a plurality of query requests for an application, and parse the query requests to obtain at least one piece of column information included in each query request or in the query requests ⟋ 101

Determine, based on at least one piece of column information included in each query request or in the query requests, candidate column combinations of one or more tables related to each of the query requests ⟋ 102

Determine, based on a plurality of candidate column combinations belonging to one of tables related to the plurality of query requests, respective target column combinations of the tables ⟋ 103

Store table data of the tables according to the respective target column combinations ⟋ 104

FIG. 4

Determine, based on the at least one piece of column information included in each query request or in the query requests, candidate column combinations of one or more tables related to each of the query requests — 102

Determine, based on column attribute information corresponding to column identifiers in an i$^{th}$ query request, basic column combination sets of tables related to the i$^{th}$ query request — 1021

Determine whether a basic column combination set of a j$^{th}$ table related to the i$^{th}$ query request includes only one basic column combination — 1022

No

Yes

Determine the basic column combination as a candidate column combination of the j$^{th}$ table — 1023

Merge at least two basic column combinations of the j$^{th}$ table to obtain at least one merged basic column combination of the j$^{th}$ table — 1024

Whether a total number N of tables related to the i$^{th}$ query request is 1 — 1025

Yes

No

Determine, in a case that table data of the j$^{th}$ table is stored according to the at least two basic column combinations, a first reference overhead for executing the i$^{th}$ query request — 1026

Merge, when another table including at least two basic column combinations exists in N tables, the at least two basic column combinations of the another table to obtain at least one merged basic column combination of the another table — 10212

Determine, in a case that the table data of the j$^{th}$ table is stored according to merged basic column combinations, first query overheads for executing the i$^{th}$ query request — 1027

Determine, in a case that table data of the N tables is stored according to corresponding basic column combinations, a second reference overhead for executing the i$^{th}$ query request — 10213

Determine a first minimum query overhead among the first query overheads — 1028

Determine, in a case that table data of tables each including at least two basic column combinations in the N tables is stored according to corresponding merged basic column combinations, and table data of tables each including one basic column combination is stored according to corresponding basic column combinations, second query overheads for executing the i$^{th}$ query request — 10214

Whether the first minimum query overhead is less than the first reference overhead — 1029

No

Yes

Determine a merged basic column combination corresponding to the first minimum query overhead as the candidate column combination of the j$^{th}$ table — 10210

Determine a second minimum query overhead among the second query overheads — 10215

Determine the at least two basic column combinations as candidate column combinations of the j$^{th}$ table — 10211

No

Whether the second minimum query overhead is less than the second reference overhead — 10216

Yes

Determine column combinations of tables corresponding to the second minimum query overhead as the candidate column combinations of the tables — 10217

Determine basic column combinations of the tables as the candidate column combinations of the tables — 10218

FIG. 5

Determine, based on column attribute information corresponding to column identifiers in an $i^{th}$ query request, basic column combination sets of tables related to the $i^{th}$ query request — 1021

Add a column identifier of a column whose column attribute information is a local predicate column attribute in a $j^{th}$ table to a local predicate column combination corresponding to the $j^{th}$ table — 211

Add a column identifier of a column whose column attribute information is a join predicate column attribute in the $j^{th}$ table to a join predicate column combination corresponding to the $j^{th}$ table — 212

Add a column identifier of a column whose column attribute information is a target selection column attribute in the $j^{th}$ table to a target selection column combination corresponding to the $j^{th}$ table — 213

No ⟨ Whether the local predicate column combination and the join predicate column combination satisfy a first merging condition ⟩ — 214

Yes

Merge the local predicate column combination and the join predicate column combination to obtain a first merged combination — 215

No ⟨ Whether the first merged combination and the target selection column combination satisfy a second merging condition ⟩ — 216

Yes

Merge the first merged combination and the target selection column combination to obtain a basic column combination of the $j^{th}$ table — 217

Add the basic column combination of the $j^{th}$ table to a basic column combination set of the $j^{th}$ table — 218

Determine the first merged combination and the target selection column combination as basic column combinations of the $j^{th}$ table — 219

Add the basic column combinations of the $j^{th}$ table to the basic column combination set of the $j^{th}$ table — 2110

No ⟨ Whether the join predicate column combination and the target selection column combination satisfy the second merging condition ⟩ — 2111

Yes

Merge the join predicate column combination and the target selection column combination to obtain a second merged combination — 2112

Determine the local predicate column combination and the second merged combination as basic column combinations of the $j^{th}$ table — 2113

Add the basic column combinations of the $j^{th}$ table to the basic column combination set of the $j^{th}$ table — 2114

Determine the local predicate column combination, the join predicate column combination, and the target selection column combination as basic column combinations of the $j^{th}$ table — 2115

Add the basic column combinations of the $j^{th}$ table to the basic column combination set of the $j^{th}$ table — 2116

FIG. 6

Determine, based on a plurality of candidate column combinations belonging to one of tables related to the plurality of query requests, respective target column combinations of the tables — 103

Merge at least two candidate column combinations belonging to the same table to obtain at least one merged candidate column combination of the corresponding tables — 1031

Determine, when table data of tables is stored according to corresponding merged candidate column combinations, total query overheads for executing a plurality of query requests — 1032

Determine a minimum total query overhead among the total query overheads — 1033

Determine merged candidate column combinations of tables corresponding to the minimum total query overhead as the target column combinations of the tables — 1034

## FIG. 7

Determine, when table data of tables is stored according to corresponding merged candidate column combinations, total query overheads for executing a plurality of query requests — 1032

Determine, when the table data of the tables is stored according to the corresponding merged candidate column combinations, third query overheads for executing the query requests — 321

Acquire the number of execution times of the query requests — 322

Determine, based on the number of execution times of the query requests and the third query overheads corresponding to the query requests, the total query overheads for executing the plurality of query requests — 323

## FIG. 8

Store table data of tables according to target column combinations ⌐ 104

Whether there are at least two sparse target column combinations in target column combinations of an $s^{th}$ table ⌐1041

Yes / No

Merge the at least two sparse target column combinations to obtain at least one merged sparse target column combination ⌐1042

Determine new metadata information corresponding to sparse target column identifiers in the at least one merged sparse target column combination ⌐1043

Store column data corresponding to the sparse target column identifiers into a corresponding storage file based on metadata information corresponding to the sparse target column identifiers ⌐1044

Update the metadata information corresponding to the sparse target column identifiers in a system table to the new metadata information corresponding to the sparse target column identifiers ⌐1045

Determine, when the $s^{th}$ table further includes another target column combination except the at least two sparse target column combinations, new metadata information corresponding to other target column identifiers in the another target column combination ⌐1046

Store column data corresponding to the other target column identifiers into the corresponding storage file based on the new metadata information corresponding to the other target column identifiers in the another target column combination ⌐1047

Update metadata information corresponding to the other target column identifiers in the system table to the new metadata information corresponding to the other target column identifiers ⌐1048

Determine new metadata information corresponding to target column identifiers in the target column combination ⌐1049

Store column data corresponding to the target column identifiers into a corresponding storage file based on the new metadata information corresponding to the target column identifiers in the target column combination ⌐10410

Update metadata information corresponding to the target column identifiers in a system table to the new metadata information corresponding to the target column identifiers ⌐10411

FIG. 9

Acquire a plurality of query requests for an application, and parse the query requests to obtain at least one piece of column information included in each query request or in the query requests ── 101

Determine, based on the at least one piece of column information included in each query request or in the query requests, candidate column combinations of one or more tables related to each of the query requests ── 102

Determine, based on a plurality of candidate column combinations belonging to one of tables related to the plurality of query requests, respective target column combinations of the tables ── 103

Store table data of the tables according to the target column combinations ── 104

Store, when data update information is received in a data storage process, the data update information into an update log ── 105

Update, after data storage is completed, the table data based on the data update information in the update log to obtain updated table data ── 106

Delete the data update information from the update log ── 107

FIG. 10

1101 — Check a query

1102 — Parse the query

Lexical analyzer
Syntactic parser

Parse tree

Query

Query

Query

Query

1103 — Rewrite the query

Promote a sub-query
Promote a sub-link

Modified
parse tree

Query

Query

1104 — Calculate an
access path

Calculate the access path
according to a query block

Access
path

Optimized
information

Optimized
information

1105 — Generate a plan

Generate a runtime
structure

Runtime
structure

Data structure
of plan tree

Plan state

1106 — Execute the query

An executor execute
the query based on
the runtime structure

Plan

## FIG. 11A

SELECT T1.C3, T1.C4, T2.C3
from T1, T2
where T1.C1 = 10
    and T2.C1 = 20
    and T2.C4 between 10 and 20
    and T1.C2 = T2.C2;

T1

Local predicate column → C1

Join predicate column → C2

Target selection column → C3

T2

Local predicate column → C1 → C4

Join predicate column → C2

Target selection column → C3

## FIG. 11B

```
         ┌─────────────────────────┐        ┌──────────────────────┐        ┌──────────────────────────────────────────────┐
         │ Select query            │      ┌→│ Table information    │        ┆ ┌──────────────────────────────┐               ┆
1111 ───⌒│String    *query_str;    │      │ ├──────────────────────┤        ┆ │ Table information            │ ⌒ 1115        ┆
1112 ───⌒│Path      *query_path;   ├──────┤ │HTAP    *tableList    ├──────→┆ ├──────────────────────────────┤               ┆
1113 ───⌒│HTAP      *table_infos;  │      │ └──────────────────────┘        ┆ │List    *local_col_list;      │               ┆
1114 ───⌒│Long      *times;        │      │                                 ┆ │List    *join_col_list;       │               ┆
         └─────────────────────────┘      │                                 ┆ │List    *target_col_list      │               ┆
                                          │ ┌──────────────────────┐        ┆ └──────────────────────────────┘               ┆
                                          ├→│ Table information    │        ┆                                                ┆
                                          │ ├──────────────────────┤        ┆ ┌──────────────────────────────┐               ┆
                                          │ │HTAP    *tableList    │      ┌→┆ │ Table information            │               ┆
                                          │ └──────────────────────┘      │ ┆ ├──────────────────────────────┤               ┆
                                          │                               │ ┆ │List    *local_col_list;      │               ┆
                                          │                               │ ┆ │List    *join_col_list;       │               ┆
                                          │                               │ ┆ │List    *target_col_list      │               ┆
                                          │ ┌──────────────────────┐      │ ┆ └──────────────────────────────┘               ┆
                                          └→│ Table information    │      │ ┆                                                ┆
                                            ├──────────────────────┤      │ ┆ ┌──────────────────────────────┐               ┆
                                            │HTAP    *tableList    │    ┌→┆ │ Table information            │               ┆
                                            └──────────────────────┘    │ ┆ ├──────────────────────────────┤               ┆
                                                                        │ ┆ │List    *local_col_list;      │               ┆
                                                                        │ ┆ │List    *join_col_list;       │               ┆
                                                                        │ ┆ │List    *target_col_list      │               ┆
                                                                        │ ┆ └──────────────────────────────┘               ┆
                                                                        └─┆                                                ┆
                                                                          └────────────────────────────────────────────────┘
```

## FIG. 11C

```
┌────┐      ┌─────────────────────────────────────┐    ┌────┐   ┌────┐   ┌────┐
│ T1 ├──┬──→│ Local predicate column combination 1201 ├→│ C1 ├─→│ C2 ├─→│ C3 │
└────┘  │   └─────────────────────────────────────┘    └────┘   └────┘   └────┘
        │   ┌─────────────────────────────────────┐    ┌────┐   ┌────┐
        ├──→│ Join predicate column combination 1202 ├→│ C4 ├─→│ C5 │
        │   └─────────────────────────────────────┘    └────┘   └────┘
        │   ┌─────────────────────────────────────┐    ┌────┐   ┌────┐
        └──→│ Target selection column combination 1203 ├→│ C6 ├─→│ C7 │
            └─────────────────────────────────────┘    └────┘   └────┘
```

⇓

```
┌────┐      ┌─────────────────────────────────┐    ┌────┐   ┌────┐   ┌────┐   ┌────┐   ┌────┐
│ T1 ├──┬──→│ First merged combination 1204   ├───→│ C1 ├─→│ C2 ├─→│ C3 ├─→│ C4 ├─→│ C5 │
└────┘  │   └─────────────────────────────────┘    └────┘   └────┘   └────┘   └────┘   └────┘
        │   ┌─────────────────────────────────────┐    ┌────┐   ┌────┐
        └──→│ Target selection column combination 1203 ├→│ C6 ├─→│ C7 │
            └─────────────────────────────────────┘    └────┘   └────┘
```

⇓

```
┌────┐      ┌───────────────────────────────┐   ┌────┐  ┌────┐  ┌────┐  ┌────┐  ┌────┐  ┌────┐  ┌────┐
│ T1 ├─────→│ Basic column combination 1205 ├──→│ C1 ├─→│ C2 ├─→│ C3 ├─→│ C4 ├─→│ C5 ├─→│ C6 ├─→│ C7 │
└────┘      └───────────────────────────────┘   └────┘  └────┘  └────┘  └────┘  └────┘  └────┘  └────┘
```

## FIG. 12

Column reading overhead = I/O overhead + CPU overhead

I/O overhead file opening overhead + random reading overhead + sequential reading overhead

CPU overhead = basic overhead + page reading overhead + page scanning overhead + scanning recording overhead

FIG. 13

| Column reading overhead = I/O overhead + CPU overhead | 4825 = 4030 + 965 | 2635 = 2260 + 375 |
|---|---|---|
| I/O overhead file opening overhead + random reading overhead + sequential reading overhead | 4030 = 1 * 30 + 3000 + 1000 | 2260 = 1 * 10 + 1000 + 1250 |
| CPU overhead = basic overhead + page reading overhead + page scanning overhead + scanning recording overhead | 795 = 10 * 30 + 0.01 * 11000 + 0.005 * 11000+ 110000 * 0.001 * 3 | 375 = 10 * 10 + 0.01 * 11000 + 0.005 * 11000+ 110000 * 0.001 |

FIG. 14

Merged candidate column
combination 1

Candidate column combination 1 → C1 → C2 → C3

Candidate column combination 2 → C2 → C3 → C6 → C7

⇒ C1 → C2 → C3 → C6 → C7

Merged candidate column
combination 2

Candidate column combination 1 → C1 → C2 → C3

Candidate column combination 3 → C4 → C5

⇒ C1 → C2 → C3 → C4 → C5

Merged candidate column combination 3

Candidate column combination 2 → C2 → C3 → C6 → C7

Candidate column combination 3 → C4 → C5

⇒ C2 → C3 → C4 → C5
→ C6 → C7

Merged candidate column combination 4

Candidate column combination 1 → C1 → C2 → C3

Candidate column combination 2 → C2 → C3 → C6 → C7

Candidate column combination 3 → C4 → C5

⇒ C1 → C2 → C3 → C4 → C5
→ C6 → C7

FIG. 15

SELECT T1.C3, T1.C4, T2.C3
from T1, T2
where T1.C1 = 10
    and T2.C1 = 20
    and T2.C4 between 10 and 20
    and T1.C2 = T2.C2;

Merged candidate column combination 1

C1 → C2 → C3 → C6 → C7 ⇒

Execute a query 1 x times

Execute a query 2 y times

Execute a query 3 z times

Overhead of query 1

Overhead of query 2

Overhead of query 3

Total overhead of merged
candidate column
combination 1 = overhead
of query 1 * x
+ overhead of query 2 * y
+ overhead of query 3 * z

FIG. 16A

SELECT T1.C3, T1.C4, T2.C3

SELECT T1.C3, T1.C4, T2.C3
from T1, T2
where T1.C1 = 10
    and T2.C1 = 20
    and T2.C4 between 10 and 20
        and T1.C2 = T2.C2;

Execute a query 1 x times

Execute a query 2 y times

Execute a query 1 z times

Select a merged candidate column combination with a minimum total overhead

C1 → C2 → C3 → C6 → C7

C1 → C2 → C3 → C4 → C5

C2 → C3 → C4 → C5 → C6 → C7

C1 → C2 → C3 → C4 → C5 → C6 → C7

Total overhead of merged candidate column combination 1

Total overhead of merged candidate column combination 2

Total overhead of merged candidate column combination 3

Total overhead of merged candidate column combination 4

FIG. 16B

| CRC |
| MAGIC |
| InfoMask |
| null_bitmap size after compression |
| Data size before compression |
| Data size after compression |

Silo header information

| null_bitmap (compression) |

NULL bitmap

| Data (compression) |

Data content

| Pad |

Page alignment padding

$$sparse\_ratio = \frac{\sum_{k=1}^{n} num\_NULL}{total\_record\_num}$$

FIG. 17

Sparse column

| Header information | Column combination information |
|---|---|
| Data | Column combination data |
| Data | Column combination data |
| Data | Column combination data |
| Header information | Column combination information |
| Data | Column combination data |
| Data | Column combination data |
| Data | Column combination data |
| Header information | Column combination information |
| Data | Column combination data |
| Data | Column combination data |
| Data | Column combination data |

1801

1802

1803

## FIG. 18

System table

| Column number | Column Name | Silo | Data size | ... |
|---|---|---|---|---|
| 1 | c1 | silo1 | 180224 | ... |
| 2 | c2 | silo2 | 98304 | ... |
| 3 | c3 | silo3 | 22423 | ... |
| 4 | c_sparse | silo4 | 34529 | ... |

Sparse system table 1901

| Sparse column number | Column name | Quantity | null_bit | ... |
|---|---|---|---|---|
| 1 | excavation | 20 | ... | ... |
| 2 | dynasty | 25 | ... | ... |
| 3 | purpose | 80 | ... | ... |

## FIG. 19

## INTERNATIONAL SEARCH REPORT

| International application No. |
| --- |
| **PCT/CN2024/099630** |

| A. | CLASSIFICATION OF SUBJECT MATTER |
| --- | --- |

G06F16/22(2019.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, USTXT, EPTXT, WOTXT, CNTXT, CNKI: 数据, 应用, 存储, 列, 查询, 组合, 表, 属性, data, app, memory, column, search, table, attribute, combination

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116821140 A (TENCENT TECHNOLOGY (SHENZHEN) CO., LTD.) 29 September 2023 (2023-09-29)<br>claims 1-19 | 1-20 |
| A | CN 114528317 A (JDT HOLDINGS CO., LTD.) 24 May 2022 (2022-05-24)<br>claims 1-4 | 1-20 |
| A | CN 112269792 A (TENCENT TECHNOLOGY (SHENZHEN) CO., LTD.) 26 January 2021 (2021-01-26)<br>entire document | 1-20 |
| A | US 2023082446 A1 (INTERNATIONAL BUSINESS MACHINES CORP.) 16 March 2023 (2023-03-16)<br>entire document | 1-20 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 September 2024** | **11 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/099630**

| Patent document cited in search report | | | Publication date (day/month/year) | Patent family member(s) | | | Publication date (day/month/year) |
|---|---|---|---|---|---|---|---|
| CN | 116821140 | A | 29 September 2023 | None | | | |
| CN | 114528317 | A | 24 May 2022 | None | | | |
| CN | 112269792 | A | 26 January 2021 | WO | 2022121560A1 | A1 | 16 June 2022 |
| | | | | HK | 40037483 | A0 | 11 June 2021 |
| | | | | US | 2023073666 | A1 | 09 March 2023 |
| US | 2023082446 | A1 | 16 March 2023 | US | 11847121 | B2 | 19 December 2023 |

Form PCT/ISA/210 (patent family annex) (July 2022)

**EP 4 654 036 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311111908